(19) Europäisches Patentamt
European Patent Office
Office européen des brevets

(11) **EP 4 727 231 A1**

(12) **EUROPEAN PATENT APPLICATION**
published in accordance with Art. 153(4) EPC

(43) Date of publication:
**15.04.2026 Bulletin 2026/16**

(21) Application number: **23942889.9**

(22) Date of filing: **29.06.2023**

(51) International Patent Classification (IPC):
***H04W 72/0446*** (2023.01)

(52) Cooperative Patent Classification (CPC):
**H04W 72/0446**

(86) International application number:
**PCT/CN2023/104071**

(87) International publication number:
**WO 2025/000380 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **GAO, Na**
**Shenzhen, Guangdong 518129 (CN)**

• **TANG, Hao**
**Shenzhen, Guangdong 518129 (CN)**
• **WANG, Ting**
**Shenzhen, Guangdong 518129 (CN)**
• **DONG, Lei**
**Shenzhen, Guangdong 518129 (CN)**
• **WEI, Dongdong**
**Shenzhen, Guangdong 518129 (CN)**
• **MA, Jianglei**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **SIGNAL TRANSMISSION METHOD AND APPARATUS**

(57)  A signal transmission method and apparatus are provided. The method includes: A first communication apparatus sends a part of a time-domain signal to a second communication apparatus, where the part of the time-domain signal occupies a part of a time-domain symbol. The second communication apparatus may recover bit information transmitted by the first communication apparatus based on the part of the time-domain signal, thereby reducing overheads of time-domain resources.

FIG. 3

**Description**

TECHNICAL FIELD

This application relates to the field of communication technologies, and in particular, to a signal transmission method and apparatus.

BACKGROUND

In wireless communication systems, a transmitting end transmits signals to a receiving end over time-domain resources and/or a frequency-domain resources. For example, the transmitting end serves as a first communication apparatus, and the receiving end serves as a second communication apparatus. The first communication apparatus sends time-domain signals to the second communication apparatus. The time-domain signals occupy a complete time-domain symbol. How to reduce time-domain resources occupied by time-domain signals is a research direction of this application.

SUMMARY

This application provides a data transmission method and apparatus, to reduce time-domain resources occupied by time-domain signals.

According to a first aspect, a signal transmission method is provided. The method is performed by a first communication apparatus. During transmission of downlink data, the first communication apparatus is an access network device, or a chip, a circuit, or the like used in an access network device. During transmission of uplink data, the first communication apparatus is a terminal, or a chip, a circuit, or the like used in a terminal. The method includes: transforming a first signal from frequency domain to time domain, to determine a second signal, where the second signal occupies one time-domain symbol; and sending a third signal, where the third signal is a part of the second signal, the third signal occupies a part of time-domain resources in the time-domain symbol, and the third signal is used for recovering the first signal.

According to the foregoing design, the first communication apparatus sends a part of a time-domain signal to a second communication apparatus, and the part of the time-domain signal occupies a part of one time-domain symbol. The second communication apparatus may recover bit information transmitted by the first communication apparatus based on the part of the time-domain signal. Compared with a design in which a time-domain signal sent by the first communication apparatus occupies one time-domain symbol, this method can reduce overheads of the time-domain resources.

In a design, the time-domain symbol is used as a guard period or a reserved resource, or used for transmit/receive transition.

According to the foregoing design, because the third signal occupies a part of time-domain resources in one time-domain symbol, remaining time-domain resources in the time-domain symbol may be used as a guard period or a reserved resource, or used for transmit/receive transition, thereby improving utilization of the time-domain resources. Alternatively, from another perspective, for a time-domain symbol used as a guard period or a reserved resource, or used for transmit/receive transition, one complete time-domain symbol is no longer allocated as the guard period or the reserved resource, or allocated for transmit/receive transition. For example, in the time-domain symbol used as the guard period or the reserved resource, or used for transmit/receive transition, a part of the time-domain resources are allocated to transmit the third signal, and remaining time-domain resources in the time-domain symbol are used as the guard period or the reserved resource, or used for transmit/receive transition. For example, in an URLLC scenario, because RTT is low, a guard period GP needs to occupy only a part of a time-domain symbol. Remaining time-domain resources in the time-domain symbol corresponding to the GP may be used for transmitting the third signal, to reduce overheads of the GP, reduce a delay caused by the GP, and the like.

In a design, before the transforming the first signal from frequency domain to time domain, to determine the second signal, the method further includes:

mapping a fourth signal to K subcarriers, to determine the first signal, where the first signal occupies the K subcarriers in frequency domain, the K subcarriers occupy a part of available frequency-domain resources, K is a positive integer, and the fourth signal is to-be-transmitted information.

According to the foregoing design, the first communication apparatus maps the to-be-transmitted information, namely the fourth signal, to a part of the available frequency-domain resources, such as the K subcarriers, but does not map the fourth signal to all of the available frequency-domain resources. This can ensure that the first signal obtained through mapping is sparse, and satisfies a condition for compressive sensing.

In a design, the method further includes: determining, based on a correspondence between bit information and a subcarrier, the K subcarriers corresponding to bit information of the fourth signal.

In a design, the fourth signal is a control signal, the fourth signal includes at least one field, and the method further includes:

determining, based on a correspondence between bit information and a subcarrier, a subcarrier corresponding to bit information of each field.

In a design, the method further includes: determining the correspondence between the bit information and the subcarrier based on a type of each field.

In a design, the method further includes: sending indication information, where the indication information indicates K or a maximum value of K, and the maximum value of K is a maximum value of a quantity of subcarriers to which the fourth signal is mapped.

According to the foregoing design, the first communication apparatus sends the indication information that indicates K or the maximum value of K to the second communication apparatus. The second communication apparatus may be configured to assist in decompressive sensing based on the indication information that indicates K or the maximum value of K. For example, K or the maximum value of K is used as an input of decompressive sensing, to recover the first signal.

In a design, the method further includes: determining the maximum value of K based on a user capability and/or the available frequency-domain resources.

In a design, the user capability indicates a capability to recover the first signal based on the third signal.

In a design, the method further includes: determining, based on a requirement of a service of the fourth signal, a time-domain length occupied by the third signal or a ratio of the time-domain length occupied by the third signal to a time-domain length occupied by the second signal.

In a design, the requirement of the service of the fourth signal includes reliability and/or a delay of the service of the fourth signal.

A higher delay requirement of the service of the fourth signal indicates a shorter time-domain length occupied by the third signal or a smaller ratio of the time-domain length occupied by the third signal to the time-domain length occupied by the second signal. A higher reliability requirement of the service of the first signal indicates a longer time-domain length occupied by the third signal or a larger ratio of the time-domain length occupied by the third signal to the time-domain length occupied by the second signal.

In a design, the method further includes: determining, based on the user capability, a time-domain length occupied by the third signal or a ratio of the time-domain length occupied by the third signal to a time-domain length occupied by the second signal, where a higher user capability indicates a shorter time-domain length occupied by the third signal or a smaller ratio of the time-domain length occupied by the third signal to the time-domain length occupied by the second signal; and a lower user capability indicates a longer time-domain length occupied by the third signal or a larger ratio of the time-domain length occupied by the third signal to the time-domain length occupied by the second signal.

In a design, before the mapping the fourth signal to the K subcarriers, to determine the first signal, the method further includes: determining a transmittable bit length based on the available frequency-domain resources, where the transmittable bit length is a bit length of the fourth signal.

In a design, the determining the transmittable bit length based on the available frequency-domain resources includes: determining the transmittable bit length based on the available frequency-domain resources and the user capability.

In a design, the method further includes: determining, based on the available frequency-domain resources, at least one of the maximum value of K, a value of K, or the time-domain length occupied by the third signal.

In a design, the method further includes: determining a bit length of transmittable information bits based on the transmittable bit length; and determining a transport block size TBS based on the bit length of the transmittable information bits.

In a design, the determining the bit length of the transmittable information bits based on the transmittable bit length includes: determining the bit length of the transmittable information bits based on the transmittable bit length, a transmission code rate, and a quantity of layers.

In a design, the bit length of the transmittable information bits satisfies the following condition:

$$Ninfo = L*R*V,$$

where Ninfo denotes the bit length of the transmittable information bits, L denotes the transmittable bit length, R denotes the transmission code rate, and V represents the quantity of layers.

According to a second aspect, a signal transmission method is provided. The method is a process performed by a peer end in the first aspect. For beneficial effects, refer to the description of the first aspect. Details are not described again. The method is performed by a second communication apparatus. During transmission of downlink data, the second communication apparatus is a terminal, or a chip, a circuit, or the like used in a terminal. During transmission of uplink data, the second communication apparatus is an access network device, or a chip, a circuit, or the like used in an access network device. The method includes: receiving a third signal, where the third signal occupies a part of time-domain resources in a time-domain symbol, and the third signal is used for recovering a first signal; and recovering the first signal based on the third signal.

In a design, the time-domain symbol is used as a guard period or a reserved resource, or used for transmit/receive transition.

In a design, after the recovering the first signal based on the third signal, the method further includes: determining a fourth signal based on position information of K subcarriers occupied by the first signal, where the K subcarriers occupy a part of available frequency-domain resources, K is a positive integer, and the fourth signal is transmitted data information.

In a design, the determining the fourth signal based on the position information of the K subcarriers occupied by the first signal includes: determining, based on a correspondence between bit information and a subcarrier, bit information of the fourth signal that corresponds to the position information of the K subcarriers.

In a design, the fourth signal is a control signal, the fourth signal includes at least one field, and the determining the fourth signal based on the position information of the K subcarriers occupied by the first signal includes: determining, based on a correspondence between bit information and a subcarrier, bit information corresponding to a subcarrier allocated to each field of the fourth signal.

In a design, the method further includes: determining the correspondence between the bit information and the subcarrier based on a type of each field.

In a design, the method further includes: receiving indication information, where the first indication information indicates K or a maximum value of K, and the maximum value of K is a maximum value of a quantity of subcarriers to which the fourth signal is mapped.

According to a third aspect, an apparatus is provided. The apparatus can implement the method in the first aspect. For example, the apparatus includes a corresponding means (means) for implementing the first aspect. The apparatus may be implemented by hardware, software, or hardware executing corresponding software.

In a design, the apparatus includes a unit for implementing the first aspect.

In a design, the apparatus includes a processor and a memory. The processor is configured to execute a computer program or instructions stored in the memory, to cause the apparatus to implement the method in the first aspect.

In a design, the apparatus includes a processor and an interface circuit. The interface circuit is configured to receive a signal from another apparatus other than the apparatus and transmit the signal to the processor, or send a signal from the processor to the another apparatus other than the apparatus. The processor is configured to implement the method in the first aspect through a logic circuit or by executing code instructions.

According to a fourth aspect, an apparatus is provided. The apparatus can implement the method in the second aspect. For example, the apparatus includes a corresponding means (means) for implementing the second aspect. The apparatus may be implemented by hardware, software, or hardware executing corresponding software.

In a design, the apparatus includes a unit for implementing the second aspect.

In a design, the apparatus includes a processor and a memory. The processor is configured to execute a computer program or instructions stored in the memory, to cause the apparatus to implement the method in the second aspect.

In a design, the apparatus includes a processor and an interface circuit. The interface circuit is configured to receive a signal from another apparatus other than the apparatus and transmit the signal to the processor, or send a signal from the processor to the another apparatus other than the apparatus. The processor is configured to implement the method in the second aspect through a logic circuit or by executing code instructions.

According to a fifth aspect, a computer-readable storage medium is provided. The computer-readable storage medium stores a computer program or instructions. When the computer program or the instructions run on a computer, the computer is caused to implement the method in the first aspect or the second aspect.

According to a sixth aspect, a computer program product is provided. The computer program product includes a computer program or instructions. When the computer program or the instructions run on a computer, the method in the first aspect or the second aspect is performed.

According to a seventh aspect, a chip is provided. The chip includes a processor. The processor is coupled to a memory, and is configured to execute a computer program or instructions stored in the memory, to cause the chip to implement the method in the first aspect or the second aspect.

According to an eighth aspect, a communication system is provided. The communication system includes a first communication apparatus and a second communication apparatus. The first communication apparatus is configured to implement the method in the first aspect, and the second communication apparatus is configured to implement the method in the second aspect.

BRIEF DESCRIPTION OF DRAWINGS

FIG. 1 is a diagram of a communication system according to an embodiment of this application;
FIG. 2 is a schematic flowchart of compressive sensing according to an embodiment of this application;
FIG. 3 is a schematic flowchart of a data transmission method according to an embodiment of this application;
FIG. 4 is a diagram of subcarriers corresponding to different fields according to an embodiment of this application;
FIG. 5 is a diagram of subcarriers that satisfy a condition according to an embodiment of this application;
FIG. 6 is a diagram of dividing available frequency-domain resources into groups according to an embodiment of this application;
FIG. 7 is a diagram of a slot type according to an embodiment of this application;
FIG. 8 is a diagram of a structure of an apparatus according to an embodiment of this application; and
FIG. 9 is a diagram of another structure of an apparatus according to an embodiment of this application.

## DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

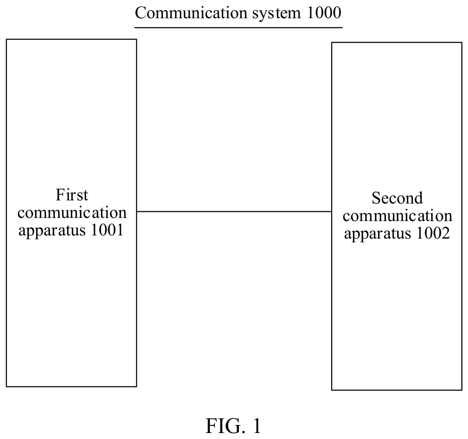

As shown in FIG. 1, a communication system 1000 is provided. The communication system 1000 includes a first communication apparatus 1001 and a second communication apparatus 1002. The first communication apparatus 1001 serves as a transmitting end, and the second communication apparatus 1002 serves as a receiving end. The first communication apparatus 1001 sends a signal to the second communication apparatus 1002. The signal is data information, control information, or the like. This is not limited. The first communication apparatus 1001 communicates with the second communication apparatus 1002 in a wireless manner. For example, the first communication apparatus 1001 carries to-be-transmitted bit information onto time-domain resources and/or frequency-domain resources, and sends the to-be-transmitted bit information to the second communication apparatus 1002.

The communication system 1000 may be a wireless communication system. The wireless communication system may be a cellular system, a satellite communication system, an inter-satellite communication system, an integrated access and backhaul (integrated access and backhaul, IAB) system, a wireless screen mirroring system, or the like. This is not limited.

[Cellular system]

A cellular system is used as an example. The cellular system includes an access network device and a terminal. The terminal is connected to the access network device in a wireless manner.

In a design, the access network device sends a downlink signal to the terminal. The downlink signal may alternatively be referred to as downlink information, and the downlink signal is carried on a downlink channel. For example, the downlink channel may be a physical downlink shared channel (physical downlink shared channel, PDSCH), or a physical downlink control channel (physical downlink control channel, PDCCH). The terminal sends an uplink signal to the access network device. The uplink signal may alternatively be referred to as uplink information, and the uplink signal is carried on an uplink channel. For example, the uplink channel may be a physical uplink shared channel (physical uplink shared channel, PUSCH), a physical uplink control channel (physical uplink control channel, PUCCH), or the like.

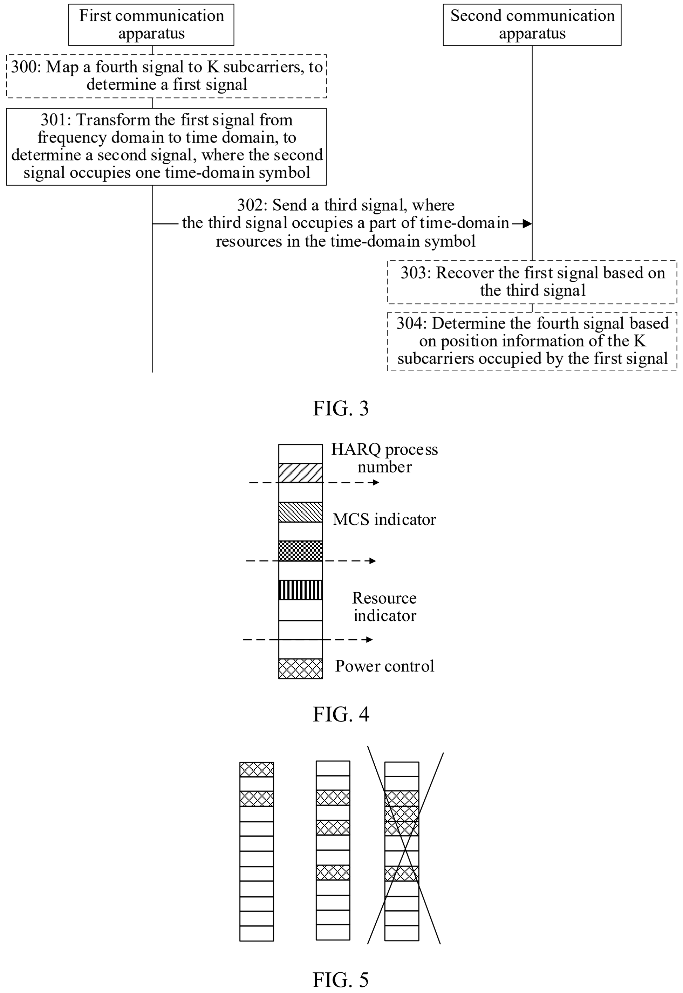

During transmission of a downlink signal, the first communication apparatus 1001 may be used in the access network device. For example, the first communication apparatus 1001 is the access network device, or is a chip, a circuit, or the like used in the access network device. The first communication apparatus 1001 is used in the terminal. For example, the first communication apparatus 1001 is the terminal, or a chip, a circuit, or the like used in the terminal. For example, the access network device may send a third signal to the terminal by using a method in a process in FIG. 3 below. The terminal may recover a first signal or the like based on the third signal. Alternatively, during transmission of an uplink signal, the first communication apparatus 1001 may be used in the terminal, and the first communication apparatus 1001 is used in the access network device. For example, the terminal may send a third signal to the access network device by using the method in the process in FIG. 3 below. The access network device may recover a first signal or the like based on the third signal.

The access network device and the terminal may communicate with each other over a licensed spectrum, or may communicate with each other over an unlicensed spectrum, or may communicate with each other over both a licensed spectrum and an unlicensed spectrum; or may communicate with each other over a spectrum below 6 gigahertz (gigahertz, GHz), or may communicate with each other over a spectrum above 6 GHz, or may communicate with each other over both a spectrum below 6 GHz and a spectrum above 6 GHz. A spectrum resource used for wireless communication is not limited in embodiments of this application.

The access network device may be a base station (base station), an evolved NodeB (evolved NodeB, eNodeB), a transmission reception point (transmission reception point, TRP), a next generation NodeB (next generation NodeB, gNB) in a 5<sup>th</sup> generation (5<sup>th</sup> generation, 5G) mobile communication system, a next generation NodeB in a 6<sup>th</sup> generation (6<sup>th</sup> generation, 6G) mobile communication system, a base station in a future mobile communication system, an access node in a wireless fidelity (wireless fidelity, Wi-Fi) system, or the like. The access network device may alternatively be a module or a unit that completes some functions of a base station, for example, may be a central unit (central unit, CU), or may be a distributed unit (distributed unit, DU). The CU herein completes functions of a radio resource control (radio resource control, RRC) layer and a packet data convergence protocol (packet data convergence protocol, PDCP) layer of the base station, and may further complete functions of a service data adaptation protocol (service data adaptation protocol, SDAP) layer. The DU completes functions of a radio link control (radio link control, RLC) layer and a medium access control (medium access control, MAC) layer of the base station, and may further complete functions of some physical (physical, PHY) layers or all physical layers. For specific descriptions of the foregoing protocol layers, refer to related technical specifications of the 3<sup>rd</sup> generation partnership project (3<sup>rd</sup> generation partnership project, 3GPP). A specific technology and a specific device form that are used by the radio access network device are not limited in embodiments of this application.

The terminal may alternatively be referred to as a terminal device, user equipment (user equipment, UE), a mobile station, a mobile terminal, or the like. The terminal may be widely used in various scenarios such as device-to-device (device-to-device, D2D) communication, vehicle-to-everything (vehicle-to-everything, V2X) communication, machine-type communication (machine-type communication, MTC), internet of things (internet of things, IOT), virtual reality, augmented reality, industrial control, autonomous driving, telemedicine, smart grid, smart home, smart office, smart wearables, intelligent transportation, and smart city. The terminal may be a mobile phone, a tablet computer, a computer with a wireless transceiver function, a wearable device, a vehicle, an unmanned aerial vehicle, a helicopter, an airplane, a ship, a robot, a mechanical arm, a smart home device, or the like. A specific technology and a specific device form that are used by the terminal are not limited in embodiments of this application.

The cellular system further includes a core network. The access network device and the core network device may be interconnected in a wireless or wired manner. The core network device and the access network device may be different physical devices that are independent of each other, or functions of the core network device and logical functions of the access network device may be integrated into a same physical device, or some functions of the core network device and some functions of the access network device may be integrated into one physical device. Optionally, the cellular system may further include another network device, for example, may further include a wireless relay device and a wireless backhaul device. This is not limited.

[Satellite communication system]

A satellite communication system is used as an example. The satellite communication system includes a satellite, a terminal, and the like. The satellite may alternatively be referred to as a satellite base station, a non-terrestrial base station, a non-terrestrial device, or the like, and is configured to provide a communication service for the terminal.

In a design, the satellite may transmit downlink data to the terminal. The downlink data is encoded through channel coding, and data obtained through channel coding is subjected to constellation modulation and then transmitted to the terminal. The terminal transmits uplink data to the satellite. The uplink data may also be encoded through channel coding, and the encoded data is subjected to constellation modulation and then transmitted to the satellite.

During transmission of downlink data, the first communication apparatus 1001 may be used in the satellite. For example, the first communication apparatus 1001 is the satellite, or a chip, a circuit, or the like used in the satellite. The first communication apparatus 1001 may be used in the terminal. For example, the first communication apparatus 1001 is the terminal, or a chip, a circuit, or the like used in the terminal. For example, the satellite may send a third signal to the terminal by using the method in the process in FIG. 3. The terminal recovers a first signal or the like based on the third signal. During transmission of uplink data, the first communication apparatus 1001 may be used in the terminal, and the first communication apparatus 1001 may be used in the access network device. For example, the terminal may send a third signal to the satellite by using the method in the process in FIG. 3. The satellite recovers a first signal or the like based on the third signal.

The satellite communication system may further include an access network device. For description of the access network device, refer to the foregoing description. The access network device may alternatively be referred to as a terrestrial base station. The satellite can communicate with the access network device. In a process in which the satellite transmits information to the access network device, the first communication apparatus 1001 may be used in the satellite, and the first communication apparatus 1001 may be used in the access network device. In a process in which the access network device transmits information to the satellite, the first communication apparatus 1001 may be used in the access network device, and the first communication apparatus 1001 may be used in the satellite.

Optionally, the satellite may refer to an unmanned aerial vehicle, a hot air balloon, a low-orbit satellite, a medium-orbit satellite, an elevated-orbit satellite, or the like.

[Inter-satellite communication system]

An inter-satellite communication system includes at least two satellites, and the two satellites may communicate with each other. When the two satellites communicate with each other, for example, the two satellites are respectively referred to as a first satellite and a second satellite, the first satellite may send a signal to the second satellite. The first communication apparatus 1001 may be used in the first satellite. For example, the first communication apparatus 1001 may be the first satellite, or a chip, a circuit, or the like used in the first satellite. The second communication apparatus 1002 may be used in the second satellite. For example, the second communication apparatus 1002 may be the second satellite, or a chip, a circuit, or the like used in the second satellite.

[IAB system]

An IAB system includes a terminal, an IAB-node (IAB-node), an IAB-donor (IAB-donor) node, and the like. The IAB-node may be referred to as a relay node, and may provide a radio access network device for the terminal. Service data of the terminal is transmitted from the IAB-node to the donor node via a wireless backhaul link, and then transmitted to a core network device through the donor node.

In a design, the terminal and the IAB-node may communicate with each other. The first communication apparatus 1001 is used in the terminal, and the second communication apparatus 1002 is used in the IAB-node. For example, the second communication apparatus 1002 is the IAB-node, or a chip, a circuit, or the like used in the IAB-node. For example, the terminal may send a third signal to the IAB-node by using the method in the process in FIG. 3 below. The IAB-node may recover a first signal or the like based on the third signal. Alternatively, the first communication apparatus 1001 is used in the IAB-node, and the second communication apparatus 1002 is used in the terminal. For example, the IAB-node may send a third signal to the terminal by using the method in the process in FIG. 3 below. The terminal may recover a first signal or the like based on the third signal.

In another design, the IAB-donor node and the IAB-node may communicate with each other. In a process in which the IAB-donor node transmits a signal to the IAB-node, the first communication apparatus 1001 is used in the IAB-donor node. For example, the first communication apparatus 1001 is the IAB-donor node, or a chip, a circuit, or the like used in the IAB-donor node. The second communication apparatus is used in the IAB-node. For example, the IAB-donor node may send a third signal to the IAB-node by using the method in the process in FIG. 3 below. The IAB-node recovers a first signal or the like based on the third signal. Alternatively, in a process in which the IAB-node transmits a signal to the IAB-donor node, the first communication apparatus 1001 is used in the IAB-node, and the second communication apparatus 1002 is used in the IAB-donor node. The IAB-node may send a third signal to the IAB-donor node by using the method in the process in FIG. 3 below. The IAB-donor node recovers a first signal or the like based on the third signal.

[Wireless screen mirroring system]

A wireless screen mirroring system includes at least two terminals: a first terminal and a second terminal. For example, the first terminal and the second terminal may be connected to a same radio access network. A dedicated channel may be established between the first terminal and the second terminal, and the dedicated channel is used for transmitting a control instruction and/or a video address. For example, the second terminal may play a corresponding video based on a video address sent by the first terminal; and/or the second terminal may perform a corresponding operation according to a control instruction of the first terminal, for example, fast-forward a played video, adjust a volume, or the like.

For example, the first terminal serves as a control end, and the second terminal serve as a video playback end. The first communication apparatus 1001 is used in the first terminal. For example, the first communication apparatus 1001 is the first terminal, or a chip, a circuit, or the like used in the first terminal. The second communication apparatus 1002 is used in the second terminal. For example, the second communication apparatus 1002 is the second terminal, or a chip, a circuit, or the like used in the second terminal. For example, the first terminal may send a third signal to the second terminal by using the method in the process in FIG. 3 below. The second terminal may recover a first signal or the like based on the third signal.

The foregoing descriptions of the application scenarios of embodiments of this application are not intended to limit embodiments of this application. The solutions in embodiments of this application are applicable to any two apparatuses that communicate by using a wireless method. In other words, in any scenario, communication between two apparatuses by using the method provided in embodiments of this application falls within the scope of protection of embodiments of this application.

In a design, the first communication apparatus may map to-be-transmitted bit information S to available frequency-domain resources, to obtain a frequency-domain signal. For example, the first communication apparatus modulates the to-be-transmitted bit information S, to obtain a modulation symbol. The first communication apparatus maps the modulation symbol to the available frequency-domain resources, to obtain the frequency-domain signal. The first communication apparatus transforms the frequency-domain signal from frequency domain to time domain to obtain a time-domain signal. The time-domain signal occupies one complete time-domain symbol. The first communication apparatus sends the time-domain signal to the second communication apparatus. The second communication apparatus demodulates the received time-domain signal, to recover S'. Optionally, the bit information S' recovered by the second communication apparatus may be the same as or different from the bit information S sent by the first communication apparatus. This is not limited. The time-domain signal sent by the first communication apparatus occupies one complete time-domain symbol, resulting in high overheads of time-domain resources.

In view of this, this application provides a signal transmission method. The first communication apparatus sends a part of a time-domain signal to the second communication apparatus, and the part of the time-domain signal occupies a part of a time-domain symbol. The second communication apparatus may recover S' based on the part of the time-domain signal, thereby reducing the overheads of the time-domain resources. For example, if one complete time-domain symbol occupies 1/14 milliseconds (ms), in the foregoing design, the time-domain signal sent by the first communication apparatus occupies 1/14 ms. In embodiments of this application, a part of a time-domain signal occupies a part of a time-domain symbol, for example, occupies 0.5 time-domain symbols. In this case, the part of the time-domain signal occupies 1/28 ms. In comparison with the foregoing design in which the time-domain symbol occupies 1/14 ms, the method provided in this application can reduce the overheads of the time-domain resources.

Embodiments of this application involve "compressive sensing". The following describes a compressive sensing process:

Converting an analog signal into a digital signal that can be processed by a computer necessarily involves a sampling process. The problem lies in determining an appropriate sampling rate. According to the Nyquist Sampling Theorem, to enable a digital signal obtained through sampling to retain all information in the principle signal, the sampling rate needs to be greater than twice a highest frequency present in the signal. The compressive sensing theory breaks through the limitation of the Nyquist Sampling Theorem. According to the theory, if a signal is sparse, the signal can be reconstructed and recovered based on sampling points that are far less than sampling points required by the sampling theorem. A prerequisite for implementing compressive sensing includes: A signal is sparse in frequency domain; and a random sub-sampling mechanism is employed. Therefore, spectrum leakage is uniformly distributed in entire frequency domain.

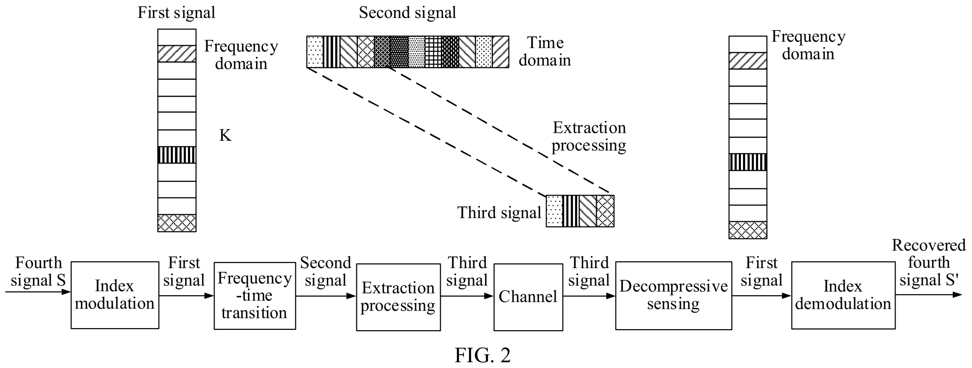

For example, an example in which the first communication apparatus is an access network device and the second communication apparatus is a terminal is used. FIG. 2 provides a diagram of a data transmission method. The data processing method may alternatively be referred to as a compressive sensing-based transmission method. The following process are included:

Step 1: The access network device obtains a fourth signal, where the fourth signal is to-be-transmitted bit information which may be denoted as S.
Step 2: The access network device performs position modulation on the fourth signal, to obtain a first signal.

For example, the access network device maps the fourth signal to K subcarriers, to obtain the first signal. The K subcarriers occupy a part of available frequency-domain resources. In a diagram of FIG. 3, the available frequency-domain resources include 12 subcarriers. The access network device maps the fourth signal to 3 subcarriers in the 12 subcarriers. In this case, a value of K is equal to 3. For specific positions of the 3 subcarriers, refer to FIG. 3.

Steps 1 and step 2 are optional. Step 1 and step 2 mainly describe a process in which the access network device obtains a sparse frequency-domain signal (namely, the first signal). For example, in step 2, the access network device maps the fourth signal to some subcarriers in the available frequency-domain resources, to ensure that the signal is sparse in frequency domain. If a signal obtained by the access network device is inherently sparse, step 1 and step 2 do not need to be performed.

Step 3: The access network device transforms the first signal from frequency domain to time domain, to obtain a second signal, where the second signal occupies one time-domain symbol.

Step 4: The access network device sends a part of the second signal to the terminal, where the part of the second signal may be referred to as a third signal, and the third signal occupies a part of one time-domain symbol.

In a design, a process of step 4 may be described as follows: The access network device performs extraction processing on the second signal, to obtain the third signal, where the third signal is an extracted part of the second signal. For a length of the time-domain symbol occupied by the third signal, refer to the following description in step 303. The access network device may perform extraction processing on any part of the second signal, to obtain the third signal. The third signal may be any part of the second signal. This is not limited. In an implementation, during transmission of downlink data, the access network device sends a downlink signal to the terminal. The downlink signal may be the third signal. The access network device may perform extraction processing on a signal corresponding to front time-domain resources in one time-domain symbol occupied by the second signal, to obtain the third signal. The third signal may be the signal corresponding to the front time-domain resources in the time-domain symbol occupied by the second signal.

Optionally, step 1 and step 4 may be referred to as a process in which the access network device processes the to-be-transmitted bit information by using the compressive sensing method.

Step 5: The terminal performs decompressive sensing on the third signal, to recover the first signal, and determines position information of the K subcarriers that carry the first signal.

Step 6: The terminal performs position demodulation on the first signal, to determine a recovered fourth signal, where the recovered fourth signal includes recovered bit information which may be denoted as S'.

In a design, the terminal determines, based on a correspondence between bit information and position information of a subcarrier, bit information corresponding to the position information of the K subcarriers. The bit information corresponding to the position information of the K subcarriers may be referred to as the recovered fourth signal or the like. Optionally, the recovered fourth signal S' and the fourth signal S sent by the access network device may be the same, or may be partially different. This is not limited.

It may be understood that, in the description of FIG. 2, an example in which the method in embodiments of this application is applied to transmission of downlink data is used for description. In this case, the access network device performs step 1 to step 4, to obtain the third signal, and sends the first signal to the terminal. The terminal performs step 5 and step 6, that is, the terminal recovers the transmitted bit information based on the third signal. The method in embodiments of this application may also be applied to transmission of uplink data. Different from the foregoing description, during transmission of uplink data, the terminal sends an uplink signal to the access network device. The terminal may perform step 1 to step 4, to obtain the third signal, and send the third signal to the access network device. The access network device performs step 5 and step 6, that is, the access network device recovers the transmitted bit information based on the third signal. In a design, during transmission of uplink data, in step 4, the terminal may perform extraction processing on a signal corresponding to rear time-domain resources in one time-domain symbol occupied by the second signal, and the third signal may be the signal corresponding to the rear time-domain resources in the time-domain symbol occupied by the second signal.

As shown in FIG. 3, embodiments of this application provide a process of a data transmission method, including the following steps.

Step 301: A first communication apparatus transforms a first signal from frequency domain to time domain, to determine a second signal, where the second signal occupies one time-domain symbol.

For example, the time-domain symbol may be an orthogonal frequency division multiplexing (orthogonal frequency division multiplexing, OFDM) symbol, a discrete Fourier transform-spread OFDM (discrete Fourier transform-spread-OFDM, DFT-s-OFDM) symbol, a time-domain symbol in a frame structure, another time-domain symbol, or the like. This is not limited. The time-domain symbol in the frame structure includes a cyclic permutation (cyclic permutation, CP) and a wanted symbol. A type of the wanted symbol is not limited. For example, the wanted symbol may be an OFDM symbol, a DFT-s-OFDM symbol, or the like.

In a design, the first communication apparatus may perform an inverse discrete Fourier transform (inverse discrete Fourier transform, IDFT) or an inverse fast Fourier transform (inverse fast Fourier transform, IFFT) on the first signal, to transform the first signal from frequency domain to time domain, so as to determine the second signal. For example, the first communication apparatus may use the first signal as an input of the IDFT or the IFFT, and an output of the IDFT or the IFFT is the second signal or the like.

Step 302: The first communication apparatus sends a third signal to a second communication apparatus, where the third signal occupies a part of time-domain resources in the time-domain symbol, and the third signal is used for recovering the first signal.

In embodiments of this application, the third signal occupies a part of time-domain resources in one time-domain symbol, and the first communication apparatus may determine a time-domain length occupied by the third signal, or a ratio of the time-domain length occupied by the third signal to a time-domain length occupied by the second signal. Because the third signal occupies a part of time-domain resources in one time-domain symbol, and the second signal occupies one time-domain symbol, the ratio of the time-domain length occupied by the third signal to the time-domain length occupied by the second signal may be measured in a unit of one time-domain symbol. For example, the time-domain symbol is an OFDM symbol, and the OFDM symbol (OFDM symbol, OS) is referred to as OS for short. The time-domain length occupied by the third signal may be 0.5 OS, 0.33 OS, or 0.8 OS. Alternatively, a unit of the time-domain length occupied by the third signal may be a time length, such as millisecond ms, second s, microsecond μs, or Ts. Ts may be a basic time unit in a wireless system, or may be a minimum time unit supported in a wireless system. For example, the unit of the time-domain length occupied by the third signal may be 1024 Ts, 512 Ts, 256 Ts, 128 Ts, or the like.

In a design, the first communication apparatus may determine, based on a requirement of a service of the fourth signal, the time-domain length occupied by the third signal or the ratio of the time-domain length occupied by the third signal to the time-domain length occupied by the second signal.

The requirement of the service of the fourth signal includes at least one of reliability, a delay, or a user channel quality indicator (channel quality indicator, CQI) of the service of the fourth signal.

Optionally, the time-domain length occupied by the third signal or the ratio of the time-domain length occupied by the third signal to the time-domain length occupied by the second signal affects data transmission performance. For example, a longer time-domain length occupied by the third signal or a larger ratio of the time-domain length occupied by the third signal to the time-domain length occupied by the second signal indicates higher data transmission reliability. For example, if data is transmitted in a compressive sensing manner, the compressive sensing performance is higher. However, a longer time-domain length occupied by the third signal or a larger ratio of the time-domain length occupied by the third signal to the time-domain length occupied by the second signal indicates a higher data transmission delay. Therefore, the time-domain length occupied by the third signal, the ratio of the time-domain length occupied by the third signal to the time-domain length occupied by the second signal, or the like needs to be determined by comprehensively considering reliability and delay requirements. Further, the channel quality indicated by the CQI may be further considered. For a relationship between the channel quality indicated by the CQI and the time-domain length of the third signal, refer to the following description.

A higher delay requirement of the service of the fourth signal indicates a shorter time-domain length occupied by the third signal or a smaller ratio of the time-domain length occupied by the third signal to the time-domain length occupied by the second signal. A higher reliability requirement of the service of the first signal indicates a longer time-domain length occupied by the third signal or a larger ratio of the time-domain length occupied by the third signal to the time-domain length occupied by the second signal. A higher channel quality indicated by the CQI indicates a shorter time-domain length occupied by the third signal or a smaller ratio of the time domain length occupied by the third signal to the time-domain length occupied by the second signal. A lower channel quality indicated by the CQI indicates a longer time-domain length occupied by the third signal or a larger ratio of the time-domain length occupied by the third signal to the time-domain length occupied by the second signal. Optionally, an upper layer of the first communication apparatus may indicate parameters related to quality of service (quality of service, QoS), and the parameters related to QoS may indicate a delay and reliability.

Optionally, the first communication apparatus may determine a maximum time-domain length occupied by the third signal, a maximum ratio of the time-domain length occupied by the third signal to the time-domain length occupied by the second signal, or the like in conditions that the reliability, delay, CQI requirements and the like of the service are met.

In another design, the first communication apparatus determines, based on a user capability, the time-domain length occupied by the third signal or the ratio of the time-domain length occupied by the third signal to the time-domain length occupied by the second signal.

A higher user capability indicates a shorter time-domain length occupied by the third signal or a smaller ratio of the time-domain length occupied by the third signal to the time-domain length occupied by the second signal; and a lower user capability indicates a longer time-domain length occupied by the third signal or a larger ratio of the time-domain length occupied by the third signal to the time-domain length occupied by the second signal.

Optionally, the user capability may be fed back by the second communication apparatus. For example, the first communication apparatus may receive the user capability from the second communication apparatus. The user capability may indicate a capability of the second communication apparatus to recover the first signal based on the third signal. In a design, the user capability may be a capability of a decompressive sensing algorithm supported by the second communication apparatus. For example, if the second communication apparatus supports a high-level, complex, or relatively high-performance decompressive sensing algorithm, such as a multipath matching pursuit (multipath matching pursuit, MMP) algorithm or an artificial intelligence (artificial intelligence, AI) algorithm, the time-domain length occupied by the third signal or the ratio of the time-domain length occupied by the third signal to the time domain length occupied by the second signal may be set to a small value. If the second communication apparatus supports a low-level, simple, or average-performance decompressive sensing algorithm, for example, the second communication apparatus supports only a basic orthogonal matching pursuit (orthogonal matching pursuit, OMP) algorithm, the time-domain length occupied by the third signal or the ratio of the time-domain length occupied by the third signal to the time-domain length occupied by the second signal may be set to a large value.

For example, the second communication apparatus, as a receiving end such as a terminal, supports a plurality of user capabilities. The first communication apparatus, as a transmitting end, correspondingly determines, based on the user capability fed back by the second communication apparatus, the time-domain length occupied by the third signal or the ratio of the time-domain length occupied by the third signal to the time domain length occupied by the second signal. A correspondence exists between the user capability and the time-domain length occupied by the third signal, or a correspondence may exist between the user capability and the ratio of the time-domain length occupied by the third signal to the time-domain length occupied by the second signal. The correspondence may be determined by the first communication apparatus, preset, specified in a protocol, determined by another communication apparatus and notified to the first communication apparatus, or the like. This is not limited. The another communication apparatus includes the second communication apparatus and the like. In a design, for the correspondence between the user capability and the ratio of the time-domain length occupied by the third signal to the time-domain length occupied by the second signal, refer to Table 1.

Table 1 Correspondence between a user capability and a ratio of time-domain length occupied by a third signal to a time-domain length occupied by a second signal

| User capability | Ratio of a time-domain length occupied by a third signal to a time-domain length occupied by a second signal |
|---|---|
| User capability 1 | 1/4 |
| User capability 2 | 1/2 |
| User capability 3 | 3/4 |
| User capability 4 | 1 |

Optionally, before step 301, the method further includes:

Step 300: The first communication apparatus maps a fourth signal to K subcarriers, to determine the first signal, where the first signal occupies the K subcarriers in frequency domain, the K subcarriers occupy a part of available frequency-domain resources, and K is a positive integer.

In embodiments of this application, the fourth signal is to-be-transmitted information. For example, the fourth signal is to-be-transmitted bit information which may be denoted as S. Optionally, the bit information may alternatively be referred to as bit data. Specifically, the available frequency-domain resources are frequency-domain resources allocated to the second communication apparatus. The first communication apparatus maps the fourth signal to a part of the frequency-domain resources allocated to the second communication apparatus. The part of the frequency-domain resources may be the K subcarriers. In other words, in addition to the K subcarriers, the frequency-domain resources allocated to the second communication apparatus further includes other frequency-domain resources. In embodiments of this application, the first communication apparatus may determine the K subcarriers by using the following method.

Example I

The first communication apparatus determines, based on a correspondence between bit information and a subcarrier, the K subcarriers corresponding to bit information of the fourth signal. In the description of this application, the correspondence may alternatively be described as a mapping relationship. For example, the correspondence between the bit information and the subcarrier may alternatively be described as a mapping relationship between the bit information and the subcarrier. In embodiments of this application, the correspondence between the bit information and the subcarrier is primarily described in the form of a table. It may be understood that, in addition to the form of a table, the correspondence between the bit information and the subcarrier may be further described in another form. This design may be used for determining the K subcarriers corresponding to a control signal and/or a data signal, that is, the fourth signal may be the control signal and/or the data signal.

Optionally, the correspondence between the bit information and the subcarrier may be determined by the first communication apparatus, preset, specified in a protocol, determined by another communication apparatus and notified to the first communication apparatus, or the like. This is not limited. For example, the another communication apparatus includes, but is not limited to, the second communication apparatus and the like.

In embodiments of this application, quantities of subcarriers corresponding to different bit information are the same or different. This is not limited. For example, Table 2 shows the correspondence between the bit information and the subcarrier. In this correspondence, quantities of subcarriers corresponding to different bit information are different. For example, as shown in Table 2, if each piece of bit information in bit information 00...00000 to bit information 00...00111 corresponds to one subcarrier, it indicates that subcarrier sparsity is equal to 1. The subcarrier sparsity indicates a quantity of subcarriers to which the bit information of the fourth signal is mapped, or is referred to as a quantity of used subcarriers, or the like. If each piece of bit information in the bit information 00...01000 to the bit information 00...11101 corresponds to two subcarriers, and the two subcarriers are not adjacent, it indicates that the subcarrier sparsity is equal to 2. If each piece of bit information in the bit information 00...11110 to the bit information 00...11111 corresponds to three subcarriers, and the three subcarriers are not adjacent, it indicates that the subcarrier sparsity is equal to 3. In Table 2, Nfft denotes a quantity of available subcarriers. It may be understood that, in the description of Table 2, a quantity of bits specifically included in the bit information is not limited. In the example description in Table 2, an ellipsis "..." in the middle of the bit information indicates that several intermediate bits are omitted. For example, an ellipsis in the bit information "00...00000" indicates that several bits may exist between two bits "0".

It may be understood that in the description of this application, the correspondence between the bit information and the subcarrier may be a correspondence between one piece of bit information and a subcarrier. For example, if one piece of bit information is 0 or 1, the correspondence may be a correspondence between bit information 0 and the subcarrier, or may be a correspondence between bit information 1 and the subcarrier. Alternatively, the correspondence may be a correspondence between a plurality of pieces of bit information and the subcarrier. The plurality of pieces of bit information may be referred to as a bit information string. Table 2 below primarily shows the correspondence between the plurality of pieces of bit information and the subcarrier.

Table 2 Correspondence between bit information and a subcarrier

| Bit information | Sequence number of a subcarrier |
|---|---|
| 00...00000 | 0 |
| 00...00001 | 1 |
| 00...00010 | 1 |
| ... | |
| 00...00111 | Nfft-1 |
| 00...01000 | 0, 2 |
| 00...01001 | 0, 3 |
| ... | |
| 00...11101 | Nfft-3, Nfft-1 |
| 00...11110 | 0, 2, 4 |
| 00...1111 | 0, 2, 5 |

It may be understood that, in Table 2, the correspondence between the bit information and the subcarrier is extensible, and the correspondence in Table 2 may include at least one of the following features:

1. When the bit information corresponds to a plurality of subcarriers, the plurality of subcarriers are not adjacent to each other or are randomly distributed, or positions of the plurality of subcarriers should not be gathered together.
2. The quantity of subcarriers corresponding to the bit information is fixed or variable. Furthermore, the subcarriers corresponding to the bit information may also be fixed or variable.
3. A one-to-one correspondence exists between the bit information and the subcarrier, that is, the bit information corresponds to one or more unique subcarriers, or one or more subcarriers correspond to unique bit information.

A quantity K of subcarriers to which the bit information of the fourth signal is mapped may be referred to as sparsity K. The sparsity K is one of the main factors that affect the compressive sensing performance and transmission performance. For example, in a case that a quantity of available subcarriers is fixed, a smaller value of the sparsity K indicates higher compressive sensing performance; and a larger value of the sparsity K indicates a longer length of the bit information. The length of the bit information may alternatively be referred to as a quantity of pieces of bit information. For example, as shown in Table 3, a larger value of the sparsity K may indicate a larger quantity of bits.

Table 3 Quantities of bits indicated by different values of sparsity K

| Sparsity K | Quantity of bits |
|---|---|
| 4 | 19 |
| 6 | 25 |
| 9 | 33 |

In a design, the sparsity K is fixed, and each piece of bit information corresponds to a same quantity of subcarriers. For example, when the value of the sparsity K is equal to 2, and the quantity of available subcarriers is equal to 8, 2 subcarriers may represent information with $\left\lfloor \log_2 \binom{8}{2} \right\rfloor = 4$ bits. In an implementation, when the value of the sparsity K is equal to 2, 2 subcarriers may represent 4-bit information. In this case, the correspondence between the bit information and the subcarrier is shown in Table 4. In this design, an indication of signaling is simple.

Table 4 Correspondence between bit information and a subcarrier when sparsity K is equal to 2

| Bit information | Sequence number of a subcarrier |
|---|---|
| 0000 | 1, 2 |
| 0001 | 1, 3 |
| 0010 | 1, 4 |
| 0011 | 1, 5 |
| ... | |

In another design, the sparsity K is variable, and different bit information may correspond to different quantities of subcarriers. The value of the sparsity K is an integer in a range from 0 to Kmax, including 0 and Kmax. Kmax may be preset, specified in a protocol, determined by another communication apparatus and notified to the first communication apparatus, or the like. This is not limited. For example, the value of the sparsity K is equal to 0, 1, ..., a maximum value of K, or the like. In an implementation, when the sparsity K is variable, and the maximum value of K is equal to 2, the sparsity K may indicate that the quantity of bits is greater than 4. Specifically, $\lfloor \log_2(\binom{8}{0} + \binom{8}{1} + \binom{8}{2}) \rfloor > 4$. As shown in Table 3, when the sparsity K is variable, and the maximum value of K is equal to 2, the sparsity K may indicate 5-bit information. For a correspondence between the 5-bit information and the subcarrier, refer to Table 5. In this design, more bits can be transmitted.

Table 5 Correspondence between bit information and a subcarrier when sparsity K is variable and maximum value of K is equal to 2

| Bit information | Sequence number of a subcarrier | K |
|---|---|---|
| 00000 | Null | K=0 |
| 00001 | 1 | K=1 |
| 00010 | 2 | |
| 00011 | 3 | |
| ... | | |
| ... | | K=2 |

Example II

Example II may be used for determining K subcarriers corresponding to a control signal. For example, the fourth signal is the control signal, and the fourth signal includes at least one field. The field may alternatively be referred to as a field segment. The first communication apparatus determines, based on a correspondence between bit information and a subcarrier, a subcarrier corresponding to bit information of each field.

For example, the fourth signal includes N fields, and each of the N fields is used for transmitting corresponding bit information. The first communication apparatus determines, based on the correspondence between the bit information and the subcarrier, the subcarrier corresponding to the bit information of each of the N fields. All subcarriers corresponding to the bit information of the N fields are the foregoing K subcarriers, and N is a positive integer.

Optionally, correspondences between bit information of different fields and subcarriers may be the same or different. This is not limited. In a design, the correspondences between the bit information of different fields and the subcarriers are different. The first communication apparatus may determine the correspondence between the bit information of each field and the subcarrier based on a type of each field. Different correspondences between the bit information and the subcarriers are designed for different fields, thereby implementing simple, flexible, and configurable correspondences.

Further, quantities of pieces of bit information carried by different fields are the same or different. This is not limited. For example, a field, such as an identifier for downlink control information (down control information, DCI) formats (identifier for DCI formats), a new data indicator (new data indicator), a VRB-to-PRB mapping (VRB-to-PRB mapping) manner between a virtual resource block (virtual resource block, VRB) and a physical resource block (physical resource block, PRB), or an uplink (uplink, UL)/supplementary uplink (supplementary uplink, SUL) indicator (indicator), carries 1-bit information. A modulation and coding scheme (modulation and coding scheme, MCS) indicator field may carry 5-bit information. For fields that carry a same quantity of pieces of bit information, one correspondence between bit information and a subcarrier may be reused. Alternatively, a correspondence between bit information and a subcarrier may be designed for each field. This is not limited.

In a design, correspondences between bit information and subcarriers may be respectively designed for fields such as an identifier for DCI formats, a new data indicator, a VRB-to-PRB mapping manner, and a UL/SUL indicator. For specific correspondences, refer to Table 6a to Table 6d.

Table 6a Correspondence between bit information and a subcarrier for an identifier for DCI formats

| Identifier for DCI formats | |
| --- | --- |
| Bit information | Sequence number of a subcarrier |
| 0 (indicating UL) | 0 |
| 1 (indicating DL) | 1 |

Table 6b Correspondence between bit information and a subcarrier for a new data indicator

| New data indicator | |
| --- | --- |
| Bit information | Sequence number of a subcarrier |
| 0 | 0 |
| 1 | 1 |

Table 6c Correspondence between bit information and a subcarrier for a VRB-to-PRB mapping manner

| VRB-to-PRB mapping manner | |
| --- | --- |
| Bit information | Sequence number of a subcarrier |
| 0 (indicating non-interleaving) | 0 |
| 1 (indicating interleaving) | 1 |

Table 6d Correspondence between bit information and a subcarrier for a UL/SUL indicator

| UL/SUL indicator | |
| --- | --- |
| Bit information | Sequence number of a subcarrier |
| 0 | 0 |
| 1 | 1 |

In another design, the MCS indicator field may carry 5-bit information, and a correspondence between the 5-bit information and a subcarrier is shown in Table 7.

Table 7 Correspondence between bit information and a subcarrier for an MCS indicator

| MCS indicator | |
| --- | --- |
| Bit information | Sequence number of a subcarrier |
| 00000 | 0 |
| 00001 | 1 |
| 00010 | 2 |
| ... | |
| 00111 | 7 |
| 01000 | 0, 2 |
| 01001 | 0, 3 |
| ... | |

(continued)

| MCS indicator | |
|---|---|
| Bit information | Sequence number of a subcarrier |
| 11101 | 5, 7 |
| 11110 | 0, 2, 4 |
| 11111 | 0, 2, 5 |

It may be understood that, in Table 7, quantities of subcarriers corresponding to different bit information are different. For example, for 00000 to 00111, each piece of bit information corresponds to 1 subcarrier. For 01000 to 11101, each piece of bit information corresponds to 2 subcarriers. For 11110 to 11111, each piece of bit information corresponds to 3 subcarriers. In an implementation, the available frequency-domain resources are divided into a plurality of groups, and each group includes at least one subcarrier. The plurality of groups are respectively allocated to different fields, and in a correspondence between bit information of each field and a subcarrier, the subcarrier is a subcarrier in a group allocated to the field. For example, as shown in FIG. 4, the available frequency-domain resources are one resource block (resource block, RB). One RB includes 12 subcarriers, and the 12 subcarriers are divided into 4 groups. A first group includes subcarrier 0 and subcarrier 1, and is allocated to a field corresponding to a hybrid automatic repeat request (hybrid automatic repeat request, HARQ) process number. A second group includes subcarrier 2 to subcarrier 5, and is allocated to a field corresponding to an MCS indicator. A third group includes subcarrier 6 to subcarrier 9, and is allocated to a field corresponding to a resource indicator. A fourth group includes subcarrier 10 and subcarrier 11, and is allocated to a field corresponding to power control. A subcarrier group corresponding to each field may be represented in the following manner: a starting subcarrier identifier and a total quantity of subcarriers. Optionally, a quantity of subcarriers included in a subcarrier group corresponding to each field, which is also referred to as a quantity of subcarriers corresponding to each field, should not exceed Kmax. When a correspondence between bit information of each field and a subcarrier is configured, a corresponding subcarrier may be selected from a subcarrier group corresponding to each field.

Optionally, in the description of embodiments of this application, different fields may be distinguished by using names of the fields. For example, if two fields have different names, the two fields are considered as different fields; and/or for any two fields, if at least one of the following control information of the two fields is different, it is considered that the two fields are different fields: control information such as a format indicator, a resource indicator, a modulation and coding scheme HARQ process, power control, or a scheduling resource position.

In embodiments of this application, in step 300, a process of mapping the fourth signal to the K subcarriers may be referred to as position modulation (index modulation). Index modulation is different from a conventional modulation process. During conventional modulation, a transmitting end modulates the fourth signal (the to-be-transmitted bit information) based on a modulation symbol, to obtain a modulation symbol, and carries the modulation symbol onto available frequency-domain resources. A receiving end demodulates the modulation symbol carried on the available frequency-domain resources, to obtain recovered bit information. In embodiments of this application, the first communication apparatus determines, based on the correspondence between the bit information and the subcarrier, the K subcarriers corresponding to the to-be-transmitted bit information of the fourth signal. The second communication apparatus may determine the K subcarriers through detection, and determine, based on the correspondence between the bit information and the subcarrier, bit information corresponding to current K subcarriers. The bit information is considered as the recovered bit information. It may be understood that, in embodiments of this application, the second communication apparatus does not determine the recovered bit information by demodulating the modulation symbol carried on the K subcarriers. Whether a relationship exists between the modulation symbol carried on the K subcarriers and the to-be-transmitted bit information of the fourth signal is not limited. For example, the to-be-transmitted bit information of the fourth signal may be modulated, to determine the modulation symbol, and the modulation symbol is carried onto the K subcarriers. Alternatively, another piece of information other than the fourth signal may be modulated, to determine the modulation symbol, and the modulation symbol is carried onto the K subcarriers or the like. This is not limited. A specific process in which the second communication apparatus recovers the transmitted bit information based on the K subcarriers is described in the following processing process of the second communication apparatus.

In embodiments of this application, when a correspondence between bit information and a subcarrier is configured, one piece of bit information corresponds to one subcarrier, or one piece of bit information corresponds to a plurality of subcarriers. The plurality of subcarriers may satisfy at least one of the following conditions: positions of any two subcarriers in the plurality of subcarriers are not adjacent, the plurality of subcarriers are randomly distributed, a probability of aggregation of the plurality of subcarriers is low, or the like. For example, the available frequency-domain resources include 12 subcarriers. In FIG. 5, each box represents one subcarrier, a black box represents an allocated subcarrier, and a white box represents an unallocated subcarrier.

In a design, 2 subcarriers may be allocated to one piece of bit information, and a correspondence exists between the bit information and the 2 subcarriers. For positions of the 2 subcarriers, refer to black boxes in the 1st diagram in FIG. 5. Alternatively, 3 subcarriers may be allocated to one piece of bit information, and a correspondence exists between the bit information and the 3 subcarriers. For positions of the three subcarriers, refer to black boxes in the 2nd diagram in FIG. 5. It can be learned that positions of any two subcarriers in the plurality of subcarriers configured for one piece of bit information are not adjacent.

In addition, 4 subcarriers may alternatively be allocated to one piece of bit information, and positions of the 4 subcarriers should not be gathered together. In the 3rd diagram in FIG. 4, positions of three subcarriers in the four subcarriers are gathered together. In embodiments of this application, positions of the four subcarriers allocated to one piece of bit information should be avoided as shown in the 3rd diagram in FIG. 4.

For example, one piece of bit information corresponds to K subcarriers. In a design, the K subcarriers may be determined in the following manner. The available frequency-domain resources are divided into g groups of subcarriers. Each group of subcarriers includes at least one subcarrier. K subcarriers are selected from the g groups of subcarriers.

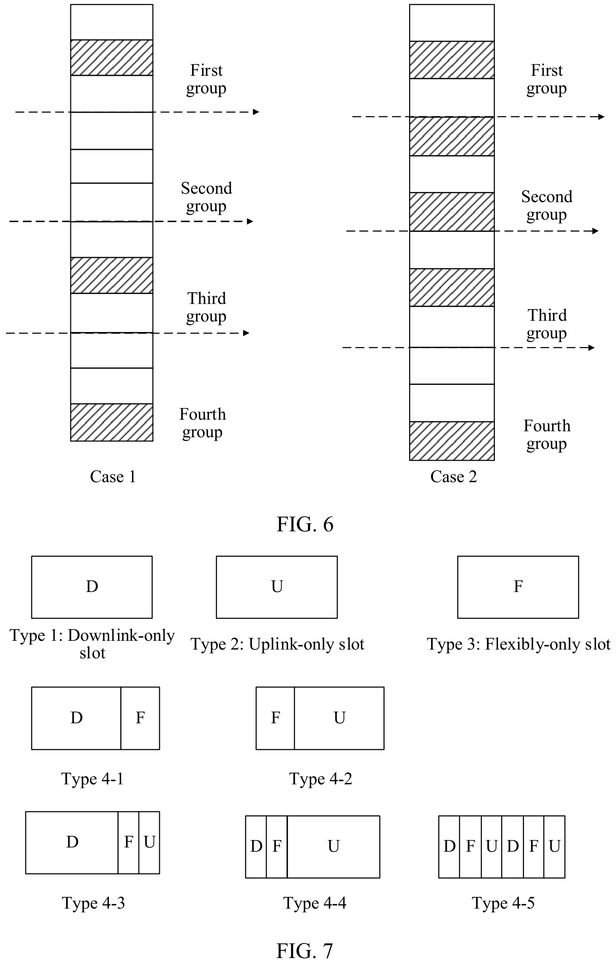

In a case that a value of g is greater than or equal to K, the K subcarriers are distributed in different groups. For example, as shown in case 1 in FIG. 6, 12 subcarriers are divided into 4 groups, that is, the value of g is equal to 4. If a value of K is equal to 3, 3 groups of subcarriers may be selected from the 4 groups of subcarriers. Then, one subcarrier is selected from each of the 3 groups of subcarriers. For the 3 selected subcarriers, refer to black long boxes in case 1 in FIG. 6.

In another case that the value of g is less than K, the K subcarriers may be preferentially distributed in different groups. When a plurality of subcarriers need to be allocated to one group, the plurality of subcarriers should not be adjacent. As shown in case 2 in FIG. 4, 12 subcarriers are divided into 4 groups, that is, the value of g is equal to 4. The value of K is equal to 5. In this case, one subcarrier may be selected from each of the 4 groups of subcarriers. Then, one subcarrier is selected from one group of subcarriers, but the subcarrier should not be adjacent to the previously selected subcarrier. For the specific 5 selected subcarriers, refer to black long boxes in the case in FIG. 6.

It may be understood that, when the frequency-domain resources are divided into groups, quantities of subcarriers included in each group may be the same or different. This is not limited. In an example in FIG. 6, an example in which each group includes a same quantity of subcarriers is used for description.

In another design, the available frequency-domain resources include one or more resource block groups (resource block groups, RBGs). Each RBG includes a plurality of RBs, each RB includes a plurality of resource elements (resource elements, REs), and one RE is equal to one subcarrier. K subcarriers may be allocated to one piece of bit information through multi-layer nesting. For example, the 1st layer is an RBG, the 2nd layer is an RB, and the 3rd layer is an RE. For example, the K subcarriers should be preferentially allocated to different RBG groups. When a plurality of subcarriers need to be allocated to a same RBG group, the plurality of subcarriers should not be allocated to a same RB or adjacent RBs. Further, if a plurality of subcarriers need to be allocated to a same RB, positions of the plurality of subcarriers should not be adjacent to each other.

According to the foregoing design, positions of K subcarriers corresponding to one piece of bit information may be easily prevented from being adjacent to each other. In a case in which bit information is similar, a performance problem caused by column correlation is resolved.

Optionally, the process shown in FIG. 3 may further include: The first communication apparatus sends indication information to the second communication apparatus, where the indication information indicates K or Kmax, and Kmax indicates a maximum value of a quantity of subcarriers to which the fourth signal is mapped.

In a design, the indication information sent by the first communication apparatus to the second communication apparatus indicates K. The second communication apparatus, as a receiving end, recovers the first signal based on K. Specifically, the first signal may be recovered by using a decompressive sensing algorithm. For example, K is used as an input of the decompressive sensing algorithm, and an output of the decompressive sensing algorithm is a recovered first signal or the like. In an implementation, the first communication apparatus may determine, based on the correspondence between the bit information and the subcarrier, a subcarrier corresponding to bit information of the fourth signal. A value of K is determined based on a quantity of corresponding subcarriers. For example, if the bit information of the fourth signal corresponds to three subcarriers, the value of K is equal to 3.

In another design, the indication information sent by the first communication apparatus to the second communication apparatus indicates Kmax. The second communication apparatus recovers the first signal based on Kmax. For example, in a decompressive sensing algorithm supported by the second communication apparatus, Kmax is required to recover the first signal. For example, when the decompressive sensing algorithm is a sparsity adaptive MP (sparsity adaptive MP, SAMP) algorithm, Kmax may be used for assisting the SAMP algorithm in recovering the first signal.

In a design, the first communication apparatus determines Kmax based on a user capability and/or available frequency-domain resources. For the user capability, refer to the foregoing description. For example, the user capability may refer to a capability of the decompressive sensing algorithm supported by the second communication apparatus. For example, if the second communication apparatus supports a high-level or complex decompressive sensing algorithm such as an MMP algorithm or an AI algorithm, Kmax may be set to a large value. Alternatively, if the second communication apparatus supports a low-level or simple decompressive sensing algorithm, for example, the second communication apparatus supports only a basic OMP algorithm, Kmax may be set to a small value.

In an implementation, a correspondence exists between the available frequency-domain resources and Kmax in a case of different user capabilities. Alternatively, a correspondence exists among the user capability, the available frequency-domain resources, and Kmax. The foregoing correspondence may be determined by the first communication apparatus, preset, specified in a protocol, notified by another notification apparatus to the first communication apparatus, or the like. This is not limited.

For example, Table 8a shows 4 user capabilities with indexes of 1 to 4, respectively. The second communication apparatus feeds back, to the first communication apparatus, an index of the user capability supported by the second communication apparatus.

Table 8a User capabilities

| User capability |
| --- |
| User capability 1 |
| User capability 2 |
| User capability 3 |
| User capability 4 |

The first terminal apparatus determines the correspondence between the available frequency-domain resources and Kmax based on the user capability. Further, the first communication apparatus determines, based on the correspondence between the available frequency-domain resources and Kmax, Kmax corresponding to currently available frequency-domain resources. Optionally, in a case of different user capabilities, correspondences between the available frequency-domain resources and Kmax are different. For example, for a correspondence between the available frequency-domain resources and Kmax in a case of user capability 1, refer to Table 8b. For a correspondence between the available frequency-domain resources and Kmax in a case of user capability 2, refer to Table 8c. In Table 8b or Table 8c, the available frequency-domain resources are referred to as N resource blocks (N resource block, NRB) for short. The NRB indicates a quantity of available RBs. Specifically, the quantity of available RBs may be a quantity of RBs allocated to the second communication apparatus, or the like.

Table 8b Correspondence between available frequency-domain resources and Kmax in a case of user capability 1

| NRB | Kmax |
| --- | --- |
| 8 | 48 |
| 10 | 60 |
| 20 | 120 |

Table 8c Correspondence between available frequency-domain resources and Kmax in a case of user capability 2

| NRB | Kmax |
| --- | --- |
| 8 | 96 |
| 10 | 120 |
| 20 | 240 |

Optionally, a first signal recovery capability corresponding to user capability 2 may be higher than a first signal recovery capability corresponding to user capability 1. It can be seen from Table 8b and Table 8c that in a case of same available frequency-domain resources, Kmax corresponding to user capability 2 is greater than Kmax corresponding to user capability 1. For example, when the available frequency-domain resources NRB are equal to 8, Kmax corresponding to the available frequency-domain resource NRB is equal to 48 in a case of user capability 1, and Kmax corresponding to the available frequency-domain resources NRB is equal to 96 in a case of user capability 2.

In a design, the following correspondence exists among the user capability, the available frequency-domain resources, and Kmax. For example, if the user capability is higher, for example, the decompressive sensing algorithm supported by the second communication apparatus is more complex or advanced, a value of Kmax is greater. A larger quantity of available frequency-domain resources indicates a larger value of Kmax. In addition, the value of Kmax may be related to a length of the to-be-transmitted bit information of the fourth signal. For example, a larger length of the to-be-transmitted bit information of the fourth signal indicates a larger value of Kmax.

The following continues to describe a process in which the second communication apparatus recovers the fourth signal based on the third signal when receiving the third signal.

Optionally, after step 302, the method further includes: step 303: The second communication apparatus recovers the first signal based on the third signal.

In a design, the second communication apparatus may recover the first signal by using a decompressive sensing algorithm. For example, the third signal is input into the decompressive sensing algorithm, and an output of this decompressive sensing algorithm is the first signal. A type of the decompressive perception algorithm is not limited. For example, the decompressive perception algorithm includes an SAMP algorithm, an MMP algorithm, an OMP algorithm, an AI algorithm, or the like. It may be understood that, in addition to inputting the third signal into the decompressive sensing algorithm, a value of K, a maximum value of K, or the like may be further input into the decompressive sensing algorithm, to assist in decompressive sensing, or the like. The value of K, the maximum value of K, or the like may be sent by the first communication apparatus to the second communication apparatus. For a specific process, refer to the foregoing description.

Optionally, step 304: The second communication apparatus determines the fourth signal based on position information of the K subcarriers occupied by the first signal, where the K subcarriers occupy a part of available frequency-domain resources, and K is a positive integer.

The process described in step 304 may be referred to as performing position demodulation on the first signal.

In a design, the first signal is a frequency-domain signal. When obtaining the first signal, the second communication apparatus may determine the position information of the K subcarriers based on the K subcarriers occupied by the first signal. The second communication apparatus determines, based on a correspondence between bit information and a subcarrier, bit information corresponding to the K subcarriers. The bit information may be referred to as a recovered fourth signal. Optionally, the correspondence between the bit information and the subcarrier may be determined by the second communication apparatus, preset, specified in a protocol, notified by another communication apparatus to the second communication apparatus, for example, notified by the first communication apparatus, or the like. This is not limited.

The design may be used for recovering a transmitted control signal and/or data signal, or the like. To be specific, the fourth signal transmitted by the first communication apparatus to the second communication apparatus may be a control signal and/or a data signal. The transmitted control signal, data signal, or the like may be recovered by using this design.

Another design may be used for recovering a control signal transmitted by the first communication apparatus to the second communication apparatus. To be specific, when the fourth signal is a control signal, the second communication apparatus may recover the fourth signal by using this design. Specifically, the fourth signal includes at least one field. The second communication apparatus may determine, based on the correspondence between the bit information and the subcarrier, bit information corresponding to a subcarrier allocated to each field.

For example, the second communication apparatus obtains position information of K subcarriers. A correspondence exists between each of the K subcarriers and a field of a control signal. The second communication apparatus determines, based on the correspondence between the bit information and the subcarrier, the bit information corresponding to the subcarrier allocated to each field. Correspondences between bit information of different fields and subcarriers may be the same or different. Optionally, when the correspondences between the bit information of different fields and the subcarriers are different, the second communication apparatus may determine the correspondence between the bit information and the subcarrier based on a type of each field.

Optionally, a correspondence exists between the subcarrier and the field of the control signal. In a design, as shown in FIG. 4, available frequency-domain resources include 12 subcarriers. In the 12 subcarriers, subcarrier 0 and subcarrier 1 are allocated to a HARQ process field, subcarrier 2 to subcarrier 5 are allocated to an MCS indicator field, subcarrier 6 to subcarrier 9 are allocated to a resource indicator field, and subcarrier 10 and subcarrier 11 are allocated to a power control field. When obtaining the position information of the K subcarriers, the second communication apparatus may determine, for each subcarrier, a field having a correspondence. For example, if the K subcarriers determined by the second communication apparatus include subcarrier 1, it may be determined, based on a correspondence shown in FIG. 6, that a correspondence exists between subcarrier 1 and the HARQ process field. The second communication apparatus determines, based on a correspondence between a subcarrier and bit information of the HARQ process field, bit information corresponding to subcarrier 1. The bit information is bit information transmitted in the HARQ process field.

Optionally, before step 300, the method further includes: The first communication apparatus determines a bit length of the fourth signal. A specific process is as follows: The first communication apparatus determines a transmittable bit length based on the available frequency-domain resources. The transmittable bit length is the bit length of the fourth signal.

For example, the transmittable bit length may be denoted as L. A correspondence exists between the available frequency-domain resources and L. The correspondence may be determined by the first communication apparatus, preset, specified in a protocol, determined by another communication apparatus and notified to the first communication apparatus, or the like. The another communication apparatus includes, but is not limited to, the second communication apparatus and the like. In a design, the first communication apparatus may obtain a plurality of correspondences, and determine, based on the plurality of correspondences, L corresponding to currently available frequency-domain resources.

Further, a user capability may be further considered. The first communication apparatus may determine L based on the available frequency-domain resources and the user capability. In a design, the correspondence between the available frequency-domain resources and L may be determined by using the user capability as an index. In other words, in a case of different user capabilities, correspondences between the available frequency-domain resources and L are different. In a case of different user capabilities, the correspondence between the available frequency-domain resources and L may be determined by the first communication apparatus, preset, specified in a protocol, determined by another notification apparatus and notified to the first communication apparatus, or the like. This is not limited. In a case of different user capabilities, the correspondence between the available frequency-domain resources and L may alternatively be described as follows: A correspondence exists among the user capability, the available frequency-domain resources, and L. In an implementation, the first communication apparatus may obtain the user capability, and determine the correspondence between the available frequency-domain resources and L based on the user capability. L corresponding to currently available frequency-domain resources is determined based on the foregoing correspondence.

Optionally, the first communication apparatus may further determine, based on the available frequency-domain resources, at least one of a maximum value of K, a value of K, or a time-domain length occupied by the third signal. For example, a correspondence exists between the available frequency-domain resources and at least one of the following: the maximum value of K, the value of K, or the time-domain length occupied by the third signal. The correspondence may be determined by the first communication apparatus, preset, specified in a protocol, determined by another communication apparatus and notified to the first communication apparatus, or the like. This is not limited.

Further, a user capability may be further considered. The first communication apparatus determines, based on the available frequency-domain resources and the user capability, at least one of the maximum value of K, the value of K, or the time-domain length occupied by the third signal. For example, in a case of different user capabilities, correspondences between the available frequency-domain resources and at least one of the following may be different: the maximum value of K, the value of K, the time-domain length occupied by the third signal, or the like. In this case, the correspondence may alternatively be described as follows: A correspondence exists among the user capability, the available frequency-domain resources, and at least one of the following: the maximum value of K, the value of K, the time-domain length occupied by the third signal, or the like. Optionally, the correspondence among the user capability, the available frequency-domain resource, and the at least one of the foregoing may be determined by the first communication apparatus, preset, specified in a protocol, determined by another communication apparatus and notified to the first communication apparatus, or the like. This is not limited.

For example, the available frequency-domain resources are denoted as NRB. The NRB indicates a quantity of available RBs, and the maximum value of K is denoted as Kmax. For a correspondence among the NRB, Kmax, the time-domain length occupied by the third signal, and L in a case of user capability 1, refer to Table 9.

Table 9 Correspondences among NRB, Kmax, a time-domain length occupied by a third signal, and L in a case of user capability 1

| NRB | Kmax | Time-domain length occupied by a third signal | Transmitted bit length L |
|---|---|---|---|
| 8 | 48 | 0.5 os | 94 |
| 10 | 60 | 0.5 os | 118 |
| 20 | 120 | 0.6 os | 238 |
| ... | ... | ... | ... |

It may be understood that, in Table 9, the correspondence among the NRB, Kmax, the time-domain length occupied by the third signal, and L is merely an example for description. In addition to the description in Table 9, another correspondence may be further included. The another correspondence is represented by an ellipsis "..." in Table 9.

Optionally, the first communication apparatus may further determine a transport block size (transport block size, TBS) based on the transmittable bit length L.

For example, the first communication apparatus determines a bit length Ninfo of transmittable information bits based on the transmittable bit length L. In a design, the transmittable bits include bits of transmittable information bits and check bits. Therefore, the transmittable bit length L may be equal to a sum of the bit length Ninfo of the transmittable information bits and a length of the check bits. Optionally, when determining the bit length Ninfo of the transmittable information bits, the first communication apparatus may further consider impact of a transmission code rate R and a quantity V of layers in addition to a factor of the transmittable bit length L. In an implementation, the first communication apparatus determines the bit length Ninfo of the transmittable information bits based on the transmittable bit length L, the transmission code rate R, and the quantity V of layers. The code transmission code rate R may refer to a code rate of a signal transmitted between the first communication apparatus and the second communication apparatus. The first communication apparatus sends a signal to the second communication apparatus through a beamforming technology. The first communication apparatus precodes the signal through a precoding matrix at each layer, to implement a beamforming effect. For example, the second communication apparatus is a terminal, and the terminal measures a reference signal, to determine a measurement result. The terminal determines a rank indicator (rank indicator, RI) based on the measurement result. The RI indicates a quantity of transport layers recommended by the terminal, and the terminal reports the RI to an access network device. The first communication apparatus is the access network device. The access network device determines the quantity V of layers based on the RI. In an implementation, the bit length Ninfo of the transmittable information bits satisfies the following condition:

$$Ninfo = L*R*V,$$

where Ninfo denotes the bit length of the transmittable information bits, L represents the transmittable bit length, R represents the transmission code rate, and V represents the quantity of layers.

It may be understood that in embodiments of this application, the first communication apparatus determines, based on the correspondence between the bit information and the subcarrier, the K subcarriers corresponding to the to-be-transmitted bit information S, and the first communication apparatus sends the position information of the K subcarriers to the second communication apparatus. The second communication apparatus determines, based on the position relationship between the bit information and the subcarrier, the bit information corresponding to the K subcarriers, and uses the corresponding bit information as the recovered transmitted information S'. A modulation symbol carried in each of the K subcarriers may be a modulation symbol obtained by modulating the to-be-transmitted bit information S, or a modulation symbol obtained by modulating another piece of information. This is not limited in embodiments of this application. Therefore, when the bit length Ninfo of the transmittable information bits is determined, impact of a modulation order is no longer considered. During modulation, the modulation order is used for determining a quantity of bits that can be represented by each symbol (element).

The first communication apparatus determines the TBS based on the bit length Ninfo of the transmittable information bits. In a design, the first communication apparatus may obtain, by looking up a table, the TBS corresponding to Ninfo. For example, the table stores a correspondence between Ninfo and the TBS, and the first communication apparatus may determine, based on the correspondence, a TBS or the like corresponding to current Ninfo.

For example, a transport block (transport block, TB) may refer to a bearer unit for data transmission between a MAC layer and a PHY layer. An input of the PHY layer of the first communication apparatus is a TB, and an output is bit information. The bit information may be considered as bit information to be transmitted by the first communication apparatus. In embodiments of this application, a length of bit information transmitted at a time by the first communication apparatus is the length of the bit information of the fourth signal.

In a design, a channel may be configured to transmit a signal by using the method shown in the process in FIG. 3, or the channel may be configured to transmit a signal by using an orthogonal frequency division multiplexing (orthogonal frequency division multiplexing, OFDM) method. Optionally, that the channel is configured to transmit a signal by using the method shown in the process in FIG. 3 may be described as follows: The channel is configured to transmit data by using a compressive sensing method. That the channel is configured to transmit a signal by using an OFDM method may be described as follows: The channel is configured to transmit data by the OFDM method.

Optionally, the first communication apparatus sends indication information to the second communication apparatus. The indication information may indicate that a channel is configured to transmit a signal by using the method shown in the process in FIG. 3, or a channel is configured to transmit a signal by using the OFDM method. For example, the indication information may occupy 1 bit. When a value of the 1 bit is a first value, it may indicate that the channel is configured to transmit data by using the method shown in the process in FIG. 3. Alternatively, when the value of the 1 bit is a second value, it may indicate that the channel is configured to transmit data by using the OFDM method. The first value may be 1, and the second value is 0. Alternatively, on the contrary, the first value may be 0, and the second value is 1.

In an implementation, when the channel is configured to transmit a signal by using the method shown in the process in FIG. 3, the first communication apparatus transmits a signal in each time-domain symbol of the channel by using the method shown in the process in FIG. 3. For example, a process in which the first communication apparatus transmits a signal in one time-domain symbol specifically includes: The first communication apparatus may determine a bit length of to-be-transmitted bit information (that is, determine the bit length of the fourth signal) based on the foregoing description. The first communication apparatus obtains the to-be-transmitted bit information (namely the fourth signal). A length of the to-be-transmitted bit information satisfies the foregoing length. The first communication apparatus maps the fourth signal to the K subcarriers, to determine the first signal. The first communication apparatus transforms the first signal from frequency domain to time domain by using the method in the process in FIG. 3, to determine the second signal. The second signal occupies one time-domain symbol. The first communication apparatus sends the third signal to the second communication apparatus. The third signal is a part of the second signal, and the third signal occupies a part of one time-domain symbol. Optionally, because the third signal occupies a part of one time-domain symbol, a purpose of a remaining part of the time-domain symbol is not limited. For example, the remaining time-domain symbol may be used as a guard period (guard period, GP) or a reserved resource, used for receive/transmit transition, or the like.

In an implementation, a process of transmitting a signal by using the OFDM method includes: The first communication apparatus transforms a to-be-transmitted signal from frequency domain to time domain, to obtain a time-domain signal. The time-domain signal occupies one time-domain symbol. The first communication apparatus sends one complete time-domain signal to the second communication apparatus. The time-domain signal occupies one complete time-domain symbol. The second communication apparatus can demodulate the time-domain signal only when the second communication apparatus receives the complete time-domain signal, that is, when the second communication apparatus receives the complete time-domain symbol.

In another design, a part of time-domain symbols of a channel may be configured to transmit a signal by using the method shown in the process in FIG. 3, and a part of the time-domain symbols are configured to transmit signals by using the OFDM method. Specifically, which time-domain symbols of the channel are configured to transmit a signal by using the method in FIG. 3, and which time-domain symbols of the channel are configured to transmit a signal by using the OFDM method may be determined by the first communication apparatus, predefined, specified in a protocol, determined by another communication apparatus and notified to the first communication apparatus. This is not limited. For example, in a downlink, it may be predefined that the last time-domain symbol of a channel is for transmitting a signal by using the method shown in the process in FIG. 3, and other time-domain symbols are for transmitting a signal by using the OFDM method. In an uplink, it may be predefined that the 1st time-domain symbol of a channel is for transmitting a signal by using the method shown in the process in FIG. 3, and other time-domain symbols are for transmitting a signal by using the OFDM method.

Different from the foregoing description, the first communication apparatus may separately determine a transmittable bit length (which may be referred to as L1) when a signal is transmitted by using the OFDM method and a transmittable bit length (which may be referred to as L2) when a signal is transmitted by using the method shown in the process in FIG. 3. The first communication apparatus determines a total transmittable bit length based on L1 and L2. For example, the total transmittable bit length is equal to a sum of L1 and L2. The first communication apparatus determines, based on the total transmittable bit length, the bit length Ninfo of the transmittable information bits, and determines the TBS based on Ninfo. According to the TBS, a length of a to-be-transmitted bit signal when a signal is transmitted by using the OFDM method, a length of a to-be-transmitted bit signal when a signal is transmitted by using the method in the process in FIG. 3, and the like are separately determined. Optionally, during bit mapping, check information is preferentially mapped to a time-domain symbol of OFDM. The check information includes check information of information bits transmitted by using the method in the process in FIG. 3 and/or check information of information bits transmitted by using the OFDM method, and/or the like. The check information includes, but is not limited to, a cyclic redundancy check (cyclic redundancy check, CRC) code.

According to the foregoing design, the compressive sensing transmission mode and the OFDM transmission mode can be flexibly configured while transmission performance and a total quantity of transmitted bits are ensured.

As described above, the second signal occupies one time-domain symbol, the third signal is a part of the second signal, and the third signal occupies a part of time-domain resources in the time-domain symbol. A purpose of remaining time-domain resources in the time-domain symbol is not limited. For example, the remaining time-domain resources in the time-domain symbol may be used as a guard period GP or a reserved resource, or used for receive/transmit transition.

In a design, for a time-domain symbol used as a guard period GP or a reserved resource, or used for receive/transmit transition, the data transmission method provided in embodiments of this application may be employed. For example, in a design, for the time-domain symbol used as the guard period GP or the reserved resource, or used for receive/transmit transition, the time-domain symbol is no longer used for another purpose. However, in embodiments of this application, utilization of the foregoing time-domain symbol is improved. The part of the time-domain resources in the time-domain symbol are used for transmitting the third signal, and the remaining time-domain resources are used as a guard period GP or a reserved resource, used for receive/transmit transition, or the like.

For example, three types of time-domain symbols are specified in a protocol, including: downlink (downlink), uplink (uplink), and flexible (flexible). A time-domain symbol of a downlink type may be denoted as a letter D, and is used for downlink transmission. A time-domain symbol of an uplink type may be denoted as a letter U, and is used for uplink transmission. A time-domain symbol of a flexible type may be denoted as a letter F, and may be used for uplink or downlink, or may be used as a guard period GP or a reserved resource, used for receive/transmit transition, or the like.

One slot (slot) includes a plurality of time-domain symbols. A quantity of time-domain symbols included in one slot is related to a subcarrier spacing. For example, when the subcarrier spacing is equal to 15 kHz, one slot includes 14 time-domain symbols. Each slot may be freely combined by the foregoing three types of time-domain symbols, so that a plurality of types of slots are formed. For example, four types of slots are specified in the protocol, as shown in FIG. 7.

Type 1 includes a "downlink" time-domain symbol, and is referred to as a DL-only slot (DL-only slot).

Type 2 includes an "uplink" time-domain symbol, and is referred to as a UL-only slot (UL-only slot).

Type 3 includes a "flexible" time-domain symbol, and is referred to as a flexible-only slot (flexible-only slot).

Type 4 includes a "downlink" time-domain symbol and/or an "uplink" time-domain symbol, and further includes a "flexible" time-domain symbol.

For example, in Type 4-1, one slot includes a downlink time-domain symbol D and a flexible time-domain symbol F. In Type 4-2, one slot includes a flexible time-domain symbol F and an uplink time-domain symbol U. In Type 4-3, one slot includes a downlink time-domain symbol D, a flexible time-domain symbol F, and an uplink time-domain symbol U. In Type 4-4, one slot includes a downlink time-domain symbol D, a flexible time-domain symbol F, and an uplink time-domain symbol U. In Types 4-5, one slot includes a downlink time-domain symbol D, a flexible time-domain symbol F, an uplink time-domain symbol U, a downlink time-domain symbol D, a flexible time-domain symbol F, an uplink time-domain symbol U, and the like.

In the slot of Type 4, it can be seen that up to two downlink/uplink transitions occur in one time domain. During downlink-uplink transition, a guard period GP needs to be set between the downlink time-domain symbol D and the uplink time-domain symbol U. Specifically, the flexible time-domain symbol F between the downlink time-domain symbol D and the uplink time-domain symbol U may be set as a guard period GP. The guard period mainly includes two parts: a DL to UL RF switching delay (DL to UL RF switching delay) and two pieces of round trip time (round trip time, RTT). RTT refers to a delay from sending of a signal at a transmitting end to reception of the signal at a receiving end.

In a factory scenario of ultra-reliable low-latency communications (ultra-reliable low-latency communications, URLLC), the RTT is relatively small. Therefore, the GP needs to occupy only a part of a time-domain symbol. According to the method provided in embodiments of this application, the third signal may be transmitted by using remaining time-domain resources in the time-domain symbol corresponding to the GP, thereby reducing time-domain overheads of the GP and reducing a delay caused by the GP.

In a design, a guard period GP may be set between the downlink time-domain symbol D and the uplink time-domain symbol U. The guard period GP may occupy one or more time-domain symbols. When the GP occupies one time-domain symbol, a part of time-domain resources in the time-domain symbol are used for transmitting the third signal by using the method in the process in FIG. 3 in this application, and remaining time-domain resources in the time-domain symbol are used as the guard period GP. When the GP occupies a plurality of time-domain symbols, one of the plurality of time-domain symbols may be used for transmitting the third signal by using the method in the process in FIG. 3 of this application, and remaining time-domain resources in the time-domain symbol and remaining time-domain symbols may be used as the guard period GP. For example, the GP occupies two time-domain symbols, a part of time-domain resources in the 1st time-domain symbol in time of the two time-domain symbols are used for transmitting the third signal, while remaining frequency-domain resources in the 1st time-domain symbol and the 2nd time-domain symbol are used as the guard period GP.

The foregoing description describes an example in which the time-domain symbol used as a GP is used for transmitting the third signal by using the method provided in embodiments of this application. Similarly, a time-domain symbol used as a reserved resource or used for receive/transmit transition may also be used for transmitting the third signal by using the method provided in embodiments of this application, thereby improving utilization of the time-domain symbol used as the reserved resource or used for receive/transmit transition. In other words, a time-domain symbol used as a GP or a reserved resource, or used for receive/transmit transition no longer occupies one complete time-domain symbol, thereby reducing the time-domain overheads of the GP, the reserved resource, or receive/transmit transition and reducing a delay.

The foregoing descriptions are not intended to limit this application. For example, an uplink time-domain symbol or a downlink time-domain symbol may also be used for transmitting a signal by using the method provided in this application. For example, during downlink transmission, a signal sent by an access network device to a terminal no longer occupies one complete time-domain symbol, but occupies a part of a time-domain symbol. The terminal may recover, based on the time-domain signal that occupies the part of the time-domain symbol, bit information or the like transmitted by the access network device. During uplink transmission, a signal sent by the terminal to the access network device may occupy a part of a time-domain symbol. The access network device may recover, based on the signal that occupies the part of the time-domain symbol, bit information or the like transmitted by the terminal.

It should be noted that, in embodiments of this application:

1. The steps performed by the first communication apparatus in FIG. 3 may be implemented by a single unit, or may be implemented by a plurality of units. This is not limited. For example, in an implementation, step 300 to step 302 may be implemented by a physical layer in the first communication apparatus. Similarly, the steps performed by the second communication apparatus in FIG. 3 may also be implemented by a single unit, or may be implemented by a plurality of units, or the like. This is not limited. For example, in an implementation, step 303 and step 304 may be implemented by a physical layer in the first communication apparatus.

2. The description focuses on differences between different processes, and descriptions of different processes may be cross-referenced.

3. In the processes in FIG. 2 and FIG. 3, an execution sequence of different steps is not limited. In addition, the processes in FIG. 2 and FIG. 3 may include fewer steps or more steps than those in the schematic flowcharts or text descriptions. This is not limited.

4. In the descriptions of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text description of this application, the character "/" generally represents an "or" relationship between associated objects. "Including at least one of A, B, or C" may represent: including A; including B; including C; including A and B; including A and C; including B and C; and including A, B, and C.

5. Various numbers in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

In the foregoing embodiments provided in this application, the method provided in embodiments of this application is described from a perspective of interaction between devices. To implement the functions in the method provided in embodiments of this application, the first communication apparatus, the second communication apparatus, or the like may include a hardware structure and/or a software module, and the foregoing functions are implemented in a form of the hardware structure, the software module, or a combination of the hardware structure and the software module. Whether a function in the foregoing functions is performed in a manner of a hardware structure, a software module, or a combination of a hardware structure and a software module depends on a design constraint condition of a specific application of the technical solution.

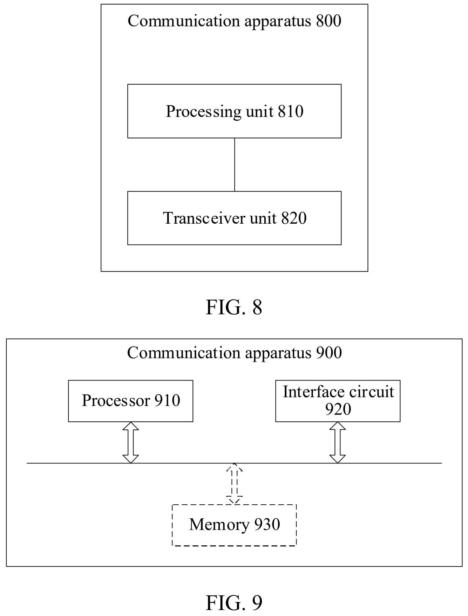

FIG. 8 and FIG. 9 are diagrams of structures of possible apparatuses according to embodiments of this application. These communication apparatuses may implement one or more corresponding functions in the foregoing method embodiments. For example, these communication apparatuses may implement the functions implemented by the first communication apparatus, the second communication apparatus, or the like, thereby achieving beneficial effects of the foregoing method embodiments.

As shown in FIG. 8, a communication apparatus 800 includes a processing unit 810 and a transceiver unit 820.

For example, the processing unit 810 may alternatively be referred to as a processor, a processing board, a processing module, a processing apparatus, or the like. The transceiver unit 820 may alternatively be referred to as a transceiver, a transmitter-receiver set, a transceiver module, a transceiver apparatus, a communication unit, or the like. Further, the transceiver unit 820 may include at least one of a transmitting unit or a receiving unit. The transmitting unit and the receiving unit may be integrated together, or may be two independent units, or the like.

In a design, the communication apparatus 800 is configured to implement the functions of the first communication apparatus in FIG. 3. Specifically, a processing unit 810 is configured to transform a first signal from frequency domain to time domain, to determine a second signal, where the second signal occupies one time-domain symbol; and a transceiver unit 820 is configured to send a third signal, where the third signal is a part of the second signal, the third signal occupies a part of time-domain resources in the time-domain symbol, and the third signal is used for recovering the first signal.

In another design, the communication apparatus 800 is configured to implement the functions of the second communication apparatus in FIG. 3. Specifically, the transceiver unit 820 is configured to receive a third signal, where the third signal occupies a part of time-domain resources in a time-domain symbol, and the third signal is used for recovering a first signal; and the processing unit 810 is configured to recover the first signal based on the third signal.

For more detailed descriptions of the processing unit 810 and the transceiver unit 820, refer to the description in FIG. 3 in the foregoing method embodiment. Details are not described herein again.

It may be understood that, in embodiments of this application, division into the units is an example, and is merely logical function division. During actual implementation, another division manner may be used. In addition, functional units in embodiments of this application may be integrated into one physical device (such as a processor), or each functional unit may be an independent physical device, or two or more units may be integrated into one unit for implementation. The integrated unit may be implemented in a form of hardware, or implemented in a form of a software functional module, or the like.

FIG. 9 is another diagram of a structure of a communication apparatus 900 according to an embodiment of this application. For example, the communication apparatus 900 shown in FIG. 9 may be a hardware circuit implementation of the communication apparatus 800 shown in FIG. 8. For ease of description, FIG. 9 shows only a primary part of the communication apparatus.

As shown in FIG. 9, the communication apparatus 900 includes a processor 910 and an interface circuit 920. The processor 910 and the interface circuit 920 are coupled to each other.

For example, the processor 910 may be a central processing unit (central processing unit, CPU) or another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor, or the like. The interface circuit 920 may be a transceiver, an input/output circuit, or the like.

Optionally, the communication apparatus 900 may further include a memory 930, configured to store instructions executed by the processor 910, or store input data required by the processor 910 to run instructions, or store data generated after the processor 910 runs instructions. For example, the instructions may alternatively be referred to as a computer program, computer program code, or the like.

For example, the memory 930 may be a random access memory (random access memory, RAM), a flash memory, a read-only memory (read-only memory, ROM), a programmable ROM (programmable ROM, PROM), an erasable PROM (erasable PROM, EPROM), an electrically EPROM (electrically EPROM, EEPROM), a register, a hard disk, a removable hard disk drive, a CD-ROM, or a storage medium of any other form well-known in the art.

When the communication apparatus 900 is configured to implement the method performed by the first communication apparatus or the second communication apparatus in FIG. 3, the processor 910 is configured to implement the functions of the processing unit 810, and the interface circuit 920 is configured to implement the functions of the transceiver unit 820.

In a design, the interface circuit 920 is configured to receive a signal from another communication apparatus other than the communication apparatus 900 and transmit the signal to the processor 910, or send a signal from the processor 910 to another communication apparatus other than the communication apparatus. The processor 910 is configured to implement the functions of the first communication apparatus or the second communication apparatus in FIG. 3 through a logic circuit or by executing code instructions.

Embodiments of this application further provide a communication apparatus. The communication apparatus includes a processor and a memory. The processor is coupled to the memory, and the processor is configured to implement the functions of the first communication apparatus or the second communication apparatus in FIG. 3. For example, the processor may execute the instructions in the memory, to enable the communication apparatus to implement one or more functions in the foregoing method embodiments, such as the functions implemented by the first communication apparatus or the second communication apparatus in FIG. 3. For example, the storage medium is coupled to the processor, to enable the processor to read information from the storage medium and write information into the storage medium. Furthermore, the storage medium may be a component of the processor. The processor and the storage medium may be disposed in an ASIC. In addition, the ASIC may be disposed in the first communication apparatus or the second communication apparatus in FIG. 3. The processor and the storage medium may alternatively exist in the first communication apparatus or the second communication apparatus in FIG. 3 as discrete components.

Embodiments of this application further provide a computer-readable storage medium. The computer-readable storage medium has instructions stored therein. The instruction may alternatively be referred to as a computer program, computer program code, or the like. The instructions, when running on a computer, enable the computer to implement the functions of the first communication apparatus or the second communication apparatus in FIG. 3 in the foregoing method embodiment.

Optionally, the computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, such as a floppy disk, a hard disk drive, or a magnetic tape; or may be an optical medium, such as a digital video disc; or may be a semiconductor medium, such as a solid-state drive. The computer-readable storage medium may be a volatile or non-volatile storage medium, or may include two types of storage media: a volatile storage medium and a non-volatile storage medium.

Embodiments of this application further provide a computer program product, including a computer program or instructions. When the computer program or the instructions run on a computer, the method performed by the first communication apparatus or the second communication apparatus in FIG. 3 is implemented. For example, the computer program product includes one or more computer programs or instructions. When the computer program or the instructions are loaded and executed on the computer, all or some of the procedures or functions of the first communication apparatus or the second communication apparatus in FIG. 3 in embodiments of this application are performed.

It may be understood that all or a part of the method provided in embodiments of this application may be implemented by using software, hardware, firmware, or any combination thereof. When implemented by using software, the method may be implemented completely or partially in a form of the computer program product.

Embodiments of this application further provide a chip. The chip includes a processor. The processor is coupled to a memory. The processor is configured to execute a computer program or instructions stored in the memory, to enable the chip to implement the functions of the first communication apparatus or the second communication apparatus in FIG. 3. For example, the chip implements the functions of the second communication apparatus. The chip may receive information from another module (such as a radio frequency or an antenna) in the second communication apparatus.

The information may be sent by the first communication apparatus to the second communication apparatus. Alternatively, the second communication apparatus may send information to another module (such as a radio frequency or an antenna) in the second communication apparatus. The information is sent by the second communication apparatus to the first communication apparatus.

Embodiments of this application further provide a communication system, including a first communication apparatus and a second communication apparatus.

The first communication apparatus may implement the functions of the first communication apparatus in FIG. 3. The second communication apparatus may implement the functions of the second communication apparatus in FIG. 3. For a specific structure of the first communication apparatus or the second communication apparatus, refer to the foregoing description, for example, the structure description in FIG. 8 or FIG. 9.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A signal transmission method, comprising:

   transforming a first signal from frequency domain to time domain, to determine a second signal, wherein the second signal occupies one time-domain symbol; and
   sending a third signal, wherein the third signal is a part of the second signal, the third signal occupies a part of time-domain resources in the time-domain symbol, and the third signal is used for recovering the first signal.

2. The method according to claim 1, wherein the time-domain symbol is used as a guard period or a reserved resource, or used for receive/transmit transition.

3. The method according to claim 1 or 2, wherein before the transforming the first signal from frequency domain to time domain, to determine the second signal, the method further comprises:
   mapping a fourth signal to K subcarriers, to determine the first signal, wherein the first signal occupies the K subcarriers in frequency domain, the K subcarriers occupy a part of available frequency-domain resources, K is a positive integer, and the fourth signal is to-be-transmitted information.

4. The method according to claim 3, further comprising:
   determining, based on a correspondence between bit information and a subcarrier, the K subcarriers corresponding to bit information of the fourth signal.

5. The method according to claim 3, wherein the fourth signal is a control signal, the fourth signal comprises at least one field, and the method further comprises:
   determining, based on a correspondence between bit information and a subcarrier, a subcarrier corresponding to bit information of each field.

6. The method according to claim 5, further comprising:
   determining the correspondence between the bit information and the subcarrier based on a type of each field.

7. The method according to any one of claims 3 to 6, further comprising:
   sending indication information, wherein the indication information indicates K or a maximum value of K, and the maximum value of K is a maximum value of a quantity of subcarriers to which the fourth signal is mapped.

8. The method according to claim 7, further comprising:
determining the maximum value of K based on a user capability and/or the available frequency-domain resources.

9. The method according to claim 8, wherein the user capability indicates a capability of recovering the first signal based on the third signal.

10. The method according to any one of claims 1 to 9, further comprising:
determining, based on a requirement of a service of the fourth signal, a time-domain length occupied by the third signal or a ratio of the time-domain length occupied by the third signal to a time-domain length occupied by the second signal.

11. The method according to claim 10, wherein the requirement of the service of the fourth signal comprises reliability and/or a delay of the service of the fourth signal; and
a higher delay requirement of the service of the fourth signal indicates a shorter time-domain length occupied by the third signal or a smaller ratio of the time-domain length occupied by the third signal to the time-domain length occupied by the second signal; and a higher reliability requirement of the service of the first signal indicates a longer time-domain length occupied by the third signal or a larger ratio of the time-domain length occupied by the third signal to the time-domain length occupied by the second signal.

12. The method according to any one of claims 1 to 9, further comprising:

determining, based on the user capability, a time-domain length occupied by the third signal or a ratio of the time-domain length occupied by the third signal to a time-domain length occupied by the second signal, wherein a higher user capability indicates a shorter time-domain length occupied by the third signal or a smaller ratio of the time-domain length occupied by the third signal to the time-domain length occupied by the second signal; and a lower user capability indicates a longer time-domain length occupied by the third signal or a larger ratio of the time-domain length occupied by the third signal to the time-domain length occupied by the second signal.

13. The method according to any one of claims 3 to 12, wherein before the mapping the fourth signal to the K subcarriers, to determine the first signal, the method further comprises:
determining a transmittable bit length based on the available frequency-domain resources, wherein the transmittable bit length is a bit length of the fourth signal.

14. The method according to claim 13, wherein the determining the transmittable bit length based on the available frequency-domain resources comprises:
determining the transmittable bit length based on the available frequency-domain resources and the user capability.

15. The method according to claim 13 or 14, further comprising:
determining, based on the available frequency-domain resources, at least one of the maximum value of K, a value of K, or the time-domain length occupied by the third signal.

16. The method according to any one of claims 13 to 15, further comprising:

determining a bit length of transmittable information bits based on the transmittable bit length; and
determining a transport block size TBS based on the bit length of the transmittable information bits.

17. The method according to claim 16, wherein the determining the bit length of the transmittable information bits based on the transmittable bit length comprises:
determining the bit length of the transmittable information bits based on the transmittable bit length, a transmission code rate, and a quantity of layers.

18. The method according to claim 17, wherein the bit length of the transmittable information bits satisfies the following condition:

$$Ninfo = L*R*V,$$

wherein Ninfo denotes the bit length of the transmittable information bits, L denotes the transmittable bit length, R represents the transmission code rate, and V represents the quantity of layers.

19. A signal transmission method, comprising:

   receiving a third signal, wherein the third signal occupies a part of time-domain resources in a time-domain symbol, and the third signal is used for recovering a first signal; and
   recovering the first signal based on the third signal.

20. The method according to claim 19, wherein the time-domain symbol is used as a guard period or a reserved resource, or used for receive/transmit transition.

21. The method according to claim 19 or 20, wherein after the recovering the first signal based on the third signal, the method further comprises:
   determining a fourth signal based on position information of K subcarriers occupied by the first signal, wherein the K subcarriers occupy a part of available frequency-domain resources, K is a positive integer, and the fourth signal is transmitted data information.

22. The method according to claim 21, wherein the determining the fourth signal based on the position information of the K subcarriers occupied by the first signal comprises:
   determining, based on a correspondence between bit information and a subcarrier, bit information of the fourth signal that corresponds to the position information of the K subcarriers.

23. The method according to claim 21, wherein the fourth signal is a control signal, the fourth signal comprises at least one field, and the determining the fourth signal based on the position information of the K subcarriers occupied by the first signal comprises:
   determining, based on a correspondence between bit information and a subcarrier, bit information corresponding to a subcarrier of each field of the fourth signal.

24. The method according to claim 23, further comprising:
   determining the correspondence between the bit information and the subcarrier based on a type of each field.

25. The method according to any one of claims 19 to 24, further comprising:
   receiving indication information, wherein the first indication information indicates K or a maximum value of K, and the maximum value of K is a maximum value of a quantity of subcarriers to which the fourth signal is mapped.

26. An apparatus, comprising a unit configured to implement the method according to any one of claims 1 to 18.

27. An apparatus, comprising a processor and a memory, wherein the processor is coupled to the memory, and the processor is configured to implement the method according to any one of claims 1 to 18.

28. An apparatus, comprising a processor and an interface circuit, wherein the interface circuit is configured to receive a signal from another apparatus other than the apparatus and transmit the signal to the processor, or send a signal from the processor to the another apparatus other than the apparatus, and the processor is configured to implement the method according to any one of claims 1 to 18 through a logic circuit or by executing code instructions.

29. An apparatus, comprising a unit configured to implement the method according to any one of claims 19 to 25.

30. An apparatus, comprising a processor and a memory, wherein the processor is coupled to the memory, and the processor is configured to implement the method according to any one of claims 19 to 25.

31. An apparatus, comprising a processor and an interface circuit, wherein the interface circuit is configured to receive a signal from another apparatus other than the apparatus and transmit the signal to the processor, or send a signal from the processor to the another apparatus other than the apparatus, and the processor is configured to implement the method according to any one of claims 19 to 25 through a logic circuit or by executing code instructions.

32. A computer-readable storage medium, wherein the computer-readable storage medium has instructions stored therein, and the instructions, when running on a computer, enable the computer to perform the method according to any one of claims 1 to 18 or the method according to any one of claims 19 to 25.

33. A computer program product, comprising a computer program or instructions, wherein when the computer program or the instructions run on an apparatus, the method according to any one of claims 1 to 18 is performed, or the method according to any one of claims 19 to 25 is performed.

34. A chip, comprising a processor, wherein the processor is coupled to a memory, and is configured to execute a computer program or instructions stored in the memory, to enable the chip to implement the method according to any one of claims 1 to 18, or to implement the method according to any one of claims 19 to 25.

35. A communication system, comprising:

a first communication apparatus, wherein the first communication apparatus is configured to perform the method according to any one of claims 1 to 18; and
a second communication apparatus, wherein the second communication apparatus is configured to perform the method according to any one of claims 19 to 25.

Communication system 1000

FIG. 1

FIG. 2

First communication apparatus

Second communication apparatus

300: Map a fourth signal to K subcarriers, to determine a first signal

301: Transform the first signal from frequency domain to time domain, to determine a second signal, where the second signal occupies one time-domain symbol

302: Send a third signal, where the third signal occupies a part of time-domain resources in the time-domain symbol

303: Recover the first signal based on the third signal

304: Determine the fourth signal based on position information of the K subcarriers occupied by the first signal

FIG. 3

HARQ process number

MCS indicator

Resource indicator

Power control

FIG. 4

FIG. 5

Case 1

Case 2

First
group

Second
group

Third
group

Fourth
group

First
group

Second
group

Third
group

Fourth
group

FIG. 6

| D |
|---|

Type 1: Downlink-only
slot

| U |
|---|

Type 2: Uplink-only slot

| F |
|---|

Type 3: Flexibly-only slot

| D | F |
|---|---|

Type 4-1

| F | U |
|---|---|

Type 4-2

| D | F | U |
|---|---|---|

Type 4-3

| D | F | U |
|---|---|---|

Type 4-4

| D | F | U | D | F | U |
|---|---|---|---|---|---|

Type 4-5

FIG. 7

Communication apparatus 800

Processing unit 810

Transceiver unit 820

FIG. 8

Communication apparatus 900

Processor 910

Interface circuit 920

Memory 930

FIG. 9

**INTERNATIONAL SEARCH REPORT**

| International application No. |
| --- |
| **PCT/CN2023/104071** |

| A. | CLASSIFICATION OF SUBJECT MATTER |
| --- | --- |

H04W72/0446(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP; CNTXT; CNABS; VEN; CNKI; WOTXT; EPTXT; USTXT: 正交频分复用符号, 时域, 频域, 转换, 循环移位码, 重组, OFDM, time, frequency, conversion, time domain, cyclic shift code, recombination

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 104125184 A (CHINA ACADEMY OF TELECOMMUNICATIONS TECHNOLOGY) 29 October 2014 (2014-10-29) description, paragraphs 37-203 | 1-35 |
| A | CN 116073971 A (HUAWEI TECHNOLOGIES CO., LTD.) 05 May 2023 (2023-05-05) entire document | 1-35 |
| A | US 2023171746 A1 (QUALCOMM INC.) 01 June 2023 (2023-06-01) entire document | 1-35 |
| A | US 6999503 B1 (NOKIA MOBILE PHONES LTD.) 14 February 2006 (2006-02-14) entire document | 1-35 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 February 2024** | **23 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/104071** |

| Patent document cited in search report | | | Publication date (day/month/year) | Patent family member(s) | | | Publication date (day/month/year) |
|---|---|---|---|---|---|---|---|
| CN | 104125184 | A | 29 October 2014 | WO | 2014173292 | A1 | 30 October 2014 |
| | | | | US | 2016072712 | A1 | 10 March 2016 |
| | | | | US | 9948562 | B2 | 17 April 2018 |
| | | | | EP | 2991299 | A1 | 02 March 2016 |
| | | | | EP | 2991299 | A4 | 31 August 2016 |
| CN | 116073971 | A | 05 May 2023 | WO | 2023078358 | A1 | 11 May 2023 |
| US | 2023171746 | A1 | 01 June 2023 | US | 11832222 | B2 | 28 November 2023 |
| US | 6999503 | B1 | 14 February 2006 | EP | 1316183 | A2 | 04 June 2003 |
| | | | | EP | 1316183 | B1 | 14 June 2006 |
| | | | | ES | 2266250 | T3 | 01 March 2007 |
| | | | | HK | 1056270 | A1 | 06 February 2004 |
| | | | | DE | 60120725 | D1 | 27 July 2006 |
| | | | | DE | 60120725 | T2 | 14 June 2007 |
| | | | | AU | 8851201 | A | 13 March 2002 |
| | | | | JP | 2004507972 | A | 11 March 2004 |
| | | | | JP | 4128867 | B2 | 30 July 2008 |
| | | | | ATE | 330405 | T1 | 15 July 2006 |
| | | | | KR | 20040008109 | A | 28 January 2004 |
| | | | | KR | 100790484 | B1 | 02 January 2008 |
| | | | | WO | 0219606 | A2 | 07 March 2002 |
| | | | | WO | 0219606 | A3 | 19 September 2002 |

Form PCT/ISA/210 (patent family annex) (July 2022)